Europäisches Patentamt

European Patent Office

Office européen des brevets

(19)

(11) Numéro de publication: **0 403 361**

**A1**

(12)

# DEMANDE DE BREVET EUROPEEN

(21) Numéro de dépôt: **90401607.8**

(22) Date de dépôt: **12.06.90**

(51) Int. Cl.⁵: **H04L 12/56**

(30) Priorité: **13.06.89 FR 8907813**

(43) Date de publication de la demande:
**19.12.90 Bulletin 90/51**

(84) Etats contractants désignés:
**AT BE CH DE DK GB IT LI LU NL SE**

(71) Demandeur: **JS TELECOM**
**36-38, rue de la Princesse**
**F-78430 Louveciennes(FR)**

(72) Inventeur: **Picandet, Jean**
**12, rue du Docteur Paquelin**
**F-75020 Paris(FR)**

(74) Mandataire: **Joly, Jean-Jacques et al**
**CABINET BEAU DE LOMENIE 55, rue**
**d'Amsterdam**
**F-75008 Paris(FR)**

(54) **Procédé et système de commutation de cellules appliqués à la commutation temporelle asynchrone.**

(57) Les réservations d'occupations des liaisons horizontales (Hi) et verticales (Vj) de la matrice de connexion (S/T) devant être sélectionnées pour permettre le transfert de cellules entrantes, chacune vers au moins une artère sortante (Sj), sont enregistrées dans une table d'occupation (TAB-OCC ET PRIO), pour chacun d'un nombre donné de périodes de transfert. Pour chaque nouvelle cellule entrante, une période de transfert est sélectionnée, au cours de laquelle la liaison horizontale et la ou chaque liaison verticale, dont la sélection est nécessaire pour assurer le transfert de cette nouvelle cellule entrante, sont libres dans la table d'occupation, l'occupation de ces liaisons est marquée dans la table d'occupation pour la période de transfert sélectionnée, et le décalage temporel avec lequel le transfert de la nouvelle cellule entrante pourra être effectué est déterminé. A chaque nouvelle période de transfert, la table d'occupation est décalée, les liaisons horizontales et verticales dont l'occupation a été enregistrée pour cette nouvelle période sont sélectionnées, et les cellules dont le transfert est à réaliser au cours de cette période sont lues dans les mémoires des circuits d'entrée, la lecture d'une cellule étant retardée, par rapport à l'enregistrement de celle-ci, d'une quantité correspondant au décalage temporel déterminé pour cette cellule.

FIG_2

## Procédé et système de commutation de cellules appliqués à la commutation temporelle asynchrone

La présente invention concerne la commutation de cellules appliquée à la commutation temporelle asynchrone.

En commutation temporelle asynchrone, l'information est transportée sous forme de paquets de longueur fixe appelés cellules.

Les cellules sont transmises dans un ordre quelconque, sur des artères à haut débit, raccordées à des noeuds de commutation de cellules. A chaque noeud de commutation sont connectées plusieurs artères entrantes qui transportent les cellules en direction de ce noeud, et plusieurs artères sortantes qui, après routage des cellules, les transportant du noeud de commutation vers un autre noeud ou vers le destinataire local.

L'établissement d'une communication entre une voie entrante et une voie sortante raccordées à ce noeud s'initialise à partir d'une cellule de signalisation émise par la voie entrante raccordée au demandeur.

Cette cellule, prise en compte par le système de communication auquel est rattachée cette voie sert à mettre à jour une table de routage qui établit pour ladite communication une association permanente entre la voie entrante et la voie sortante.

En outre, le système affecte pour cette communication, à chaque cellule entrante, un numéro de circuit virtuel permanent entrant ICVE et à chaque cellule sortante un numéro de circuit virtuel permanent sortant ICVS.

De ce fait, chaque cellule présente un en-tête contenant le numéro de circuit virtuel qui lui est affecté :
- numéro d'ICVE pour les voies entrantes
- numéro d'ICVS pour les voies sortantes.

Le routage s'opère, après analyse de l'identificateur de circuit virtuel (ICVE) de chaque cellule entrante, à l'aide de la table de routage indiquant l'artère sortante à utiliser ainsi que le nouvel identificateur de circuit virtuel (ICVS) à incorporer dans la cellule sortante correspondante.

Les systèmes connus de commutation de cellules comprennent généralement des circuits de gestion de files d'attente appelés FIFO (abréviation des termes anglais "First In First Out", c'est-à-dire Premier Entré Premier Sorti). Les FIFO sont placés aussi bien sur les artères entrantes que sur les artères sortantes afin de permettre à l'organe de commutation des cellules de pouvoir traiter séquentiellement l'acheminement de chaque cellule entrante vers la voie sortante appropriée.

Généralement, l'organe de commutation des cellules est un bus parallèle qui permet de transmettre chaque cellule, octet par octet ou groupe d'octects par groupe d'octets. Toutefois, l'importance du bus devient prohibitive lorsqu'un gros volume d'informations est a transmettre.

Un autre système de commutation connu est décrit dans le brevet FR-2 538 976. Dans ce cas, l'organe de commutation des cellules comprend une mémoire de stockage intermédiaire placée entre deux systèmes de diagonalisation des cellules accédant respectivement aux artères entrantes et aux artères sortantes. La mémoire de stockage est liée à la longueur du paquet qui doit être fixe. Dans le cas de systèmes de commutation peu équipés en entrées et en sorties, cette mémoire constitue une partie fixe importante, non compressible.

Un autre inconvénient commun aux systèmes de commutation connus évoqués ci-dessus consiste dans leur difficile adaptation à la diffusion. La diffusion consiste à générer plusieurs cellules sur des artères sortantes distinctes à partir d'une seule cellule provenant d'une artère entrante.

Dans le système de commutation à bus, il est nécessaire d'effectuer autant de transferts sur le bus qu'il y a d'artères sortantes concernées par la diffusion, d'où une mauvaise utilisation du bus.

Dans le système à stockage intermédiaire du brevet FR-2 538 976, la modification d'en-tête s'effectue avant le stockage intermédiaire. De ce fait, la possibilité d'une diffusion avec des en-têtes différentes n'apparaît pas de façon évidente. Le brevet FR-2 606 567 divulgue certes un système de commutation issu de celui du brevet FR-2 538 976 et muni d'un dispositif annexe permettant de distribuer le trafic provenant d'une artère entrante sur plusieurs artères sortantes à plus faible débit, mais ce résultat est obtenu au prix d'une complication de structure et d'une réduction du débit, consistant en un démultiplexage et non une diffusion.

Enfin, on connaît encore des systèmes de commutation utilisant une matrice spatio-temporelle permettant un brassage des artères entrantes vers les artères sortantes. Toutefois, ces systèmes utilisent un circuit FIFO gérant une file d'attente à chaque noeud de la matrice. Dès que celle-ci devient importante, le nombre de circuits FIFO est rapidement prohibitif.

La présente invention a pour but de fournir un procédé et un dispositif de commutation de cellules grâce auxquels la gestion de files d'attente peut être réalisée avec moins de matériel que les systèmes connus, tout en offrant une plus grande fiabilité.

La présente invention a aussi pour but de fournir un procédé et un dispositif de commutation de cellules permettant de réaliser simplement la fonction de diffusion.

Conformément à l'invention, ce but est atteint grâce à un procédé de commutation de cellules entre des artères entrantes et des artères sortantes, au moyen d'une matrice de connexion ayant des liaisons horizontales et verticales correspondant aux artères entrantes et aux artères sortantes, procédé caractérisé en ce que :

- chaque cellule entrante parvenant sur une artère entrante est détectée et, en réponse à la détection de la cellule, celle-ci est enregistrée dans une mémoire d'un circuit d'entrée auquel l'artère entrante est connectée, et la ou chaque artère sortante vers laquelle la cellule entrante doit être transférée est déterminée en fonction d'informations préenregistrées,

- les réservations d'occupations des liaisons horizontales et verticales de la matrice de connexion devant être sélectionnées pour permettre le transfert de cellules entrantes, chacune vers au moins une artère sortante, sont enregistrées dans une table d'occupation pour chacune d'un nombre donné de périodes de transfert, chacune des liaisons horizontales et verticales ne pouvant être sélectionnée qu'une seule fois au cours de chaque période de transfert,

- pour chaque nouvelle cellule entrante, une période de transfert est sélectionnée, au cours de laquelle la liaison horizontale et la ou chaque liaison verticale, dont la sélection est nécessaire pour assurer le transfert simultané de cette nouvelle cellule entrante vers les sorties intéressées, sont libres dans la table d'occupation, l'occupation de ces liaisons est marquée dans la table d'occupation pour la période de transfert sélectionnée, et le décalage temporel avec lequel le transfert de la nouvelle cellule entrante pourra être effectué est déterminé, et

- à chaque nouvelle période de transfert, la table d'occupation est décalée, les liaisons horizontales et verticales dont l'occupation a été enregistrée pour cette nouvelle période sont sélectionnées, et les cellules dont le transfert est à réaliser au cours de cette période sont lues dans les mémoires des circuits d'entrée, la lecture d'une cellule étant retardée, par rapport à l'enregistrement de celle-ci, d'une quantité correspondant au décalage temporel déterminé pour cette cellule.

Pour chaque cellule entrante ayant en en-tête un indicateur de circuit virtuel entrant, l'identificateur de circuit virtuel sortant correspondant est lu dans une mémoire à une adresse fonction de l'identification de circuit virtuel entrant et de l'artère entrante de laquelle est issue la cellule entrante, la lecture étant retardée, par rapport à l'instant du stockage de la cellule entrante, d'une quantité correspondant au décalage temporel pour celle-ci, et l'identificateur de circuit virtuel sortant lu est placé en tête de la cellule à la sortie de celle-ci.

L'utilisation d'une table d'occupation dans laquelle les occupations des liaisons de la matrice de connexion dont la sélection est nécessaire pour effectuer des transferts, ou commutations de cellules, pendant un certain nombre de périodes de transfert est une caractéristique de l'invention. Pour chaque nouvelle cellule entrante, la table d'occupation permet de sélectionner une période de transfert, de préférence la plus proche, au cours de laquelle les liaisons horizontales et verticales de la matrice nécessaires au transfert de la cellule sont libres d'occupation. La liaison horizontale est celle correspondant au circuit d'entrée sur lequel la cellule est parvenue et la ou les liaisons verticales sont celles correspondant aux artères sortantes, données par la table de connexion, sur laquelle ou lesquelles la cellule doit être commutée ou diffusée. L'occupation de ces liaisons est alors marquée pour la période de transfert considérée et le décalage entre la détection de la cellule et la période au cours de laquelle elle pourra être transférée est déterminé. C'est cette valeur de décalage qui est utilisée pour lire au moment voulu la cellule qui a été stockée dans la mémoire du circuit d'entrée sur lequel elle est parvenue et pour sélectionner au moment voulu les liaisons horizontale et verticales de la matrice de connexion nécessaires au transfert de la cellule.

Avantageusement, en réponse à la détection d'une cellule prioritaire, la liaison horizontale et la ou les liaisons verticales nécessaires au transfert de la cellule vers une ou plusieurs artères sortantes sont sélectionnées au cours de la première période de transfert à venir, le décalage de la table d'occupation pour cette période étant inhibé.

L'invention peut être appliquée à la commutation de premières cellules ayant un premier niveau de priorité et de deuxièmes cellules ayant un deuxième niveau de priorité inférieur au premier, par exemple des premières cellules transportant des canaux synchrones et des deuxièmes cellules transportant des canaux asynchrones et véhiculées dans des mêmes trames.

Dans ce cas, deux tables d'occupation sont prévues, l'une pour les premières cellules et la deuxième pour les deuxièmes cellules. Les chargements des tables d'occupation sont effectués selon la nature des cellules entrantes. Toutefois, le décalage de la deuxième table d'occupation est inhibé tant que la première n'est pas vide.

L'invention vise également un système mettant en oeuvre le procédé défini ci-dessus.

L'invention sera mieux comprise à la lecture de la description faite ci-après, à titre indicatif, mais non limitatif, en référence aux dessins annexés sur lesquels :

- la figure 1 est un schéma général de principe d'un système de commutation de cellules conforme à l'invention ;

- la figure 2 est un schéma fonctionnel d'un premier mode de réalisation d'un système de commutation conforme au schéma de principe de la figure 1 ;
- la figure 3 est un schéma détaillé d'un circuit d'entrée du système de commutation de la figure 2 ;
- la figure 4 est un schéma détaillé d'un circuit de sortie du système de commutation de la figure 2 ;
- la figure 5 est un schéma détaillé d'une table d'occupation et de priorité faisant partie du système de commutation de la figure 2 ;
- la figure 6 est un schéma détaillé d'une cellule de mémorisation de la table de la figure 5 ;
- la figure 7 est un schéma fonctionnel d'un deuxième mode de réalisation d'un système de commutation conforme au schéma de principe de la figure 1 ;
- la figure 8 est un schéma détaillé d'un circuit d'entrée du système de commutation de la figure 7 ;
- la figure 9 est un schéma détaillé d'un circuit de sortie du système de commutation de la figure 7 ;
- la figure 10 est un schéma détaillé de la matrice spatio-temporelle du système de commutation de la figure 7 ;
- les figures 11 et 12 illustrent les structures de trame et de cellule de données véhiculées sur une artère raccordée au système de commutation ;
- la figure 13 illustre un principe de commutation de canaux synchrones ;
- la figure 14 illustre un schéma fonctionnel d'un système de commutation conforme à l'invention pour cellules synchrones et cellules asynchrones ;
- la figure 15 est un schéma détaillé partiel d'un circuit d'entrée et de la matrice spatio-temporelle du système de commutation de la figure 14 et ;
- la figure 16 est un schéma détaillé d'un circuit de sortie du système de commutation de la figure 14.

## DESCRIPTION DU SCHEMA DE PRINCIPE

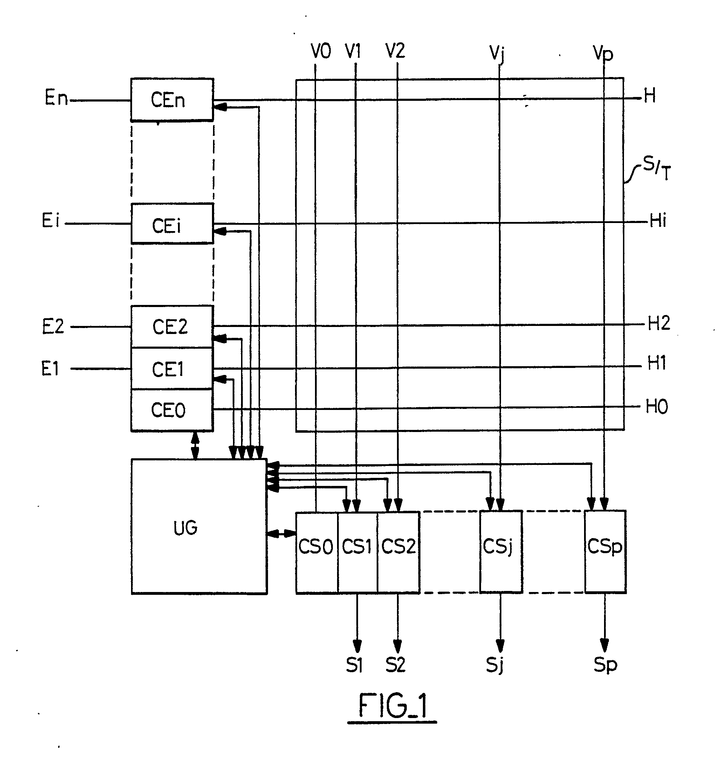

La figure 1 illustre un schéma de principe d'un système de commutation de cellules conforme à l'invention.

Les cellules à commuter sont acheminées vers le système par des liaisons entrantes E1, E2, ..., Ei, ..., En. Le système aiguille chacune de ces cellules vers une ou plusieurs liaisons sortantes S1, S2, ..., Sj, ..., Sp, après avoir placé dans les cellules les nouveaux en-têtes correspondant à leur routage dans les artères sortantes.

Les cellules provenant de chaque liaison entrante E1, E2, ..., Ei, ..., En sont stockées momentanément dans une mémoire d'un circuit d'entrée CE1, CE2, ..., CEi, ..., CEn et l'en-tête ICVE de circuit virtuel de chaque cellule entrante est transmis, dès l'arrivée de la cellule, à une unité de gestion UG.

La sortie de chaque circuit d'entrée CE1, CE2, CEi, ..., CEn donne accès à une liaison horizontale respective H1, H2, ..., Hi, ..., Hn d'une matrice de connexion spatio-temporelle -T ces liaisons verticales V1, V2, ..., Vj, ..., Vp de celle-ci sont connectées à des circuits de sortie respectifs CS1, CS2, ..., CSj, ..., CSp contenant chacun un circuit de file d'attente de type FIFO. Les circuits FIFO des circuits de sortie permettent d'adapter les vitesses de transmission des cellules entre la matrice S/T et les artères sortantes S1, S2, ..., Sj, ..., Sp.

Une cellule issue d'une mémoire d'un circuit d'entrée et transmise sur une liaison horizontale de la matrice S/T peut ainsi être transférée vers un ou plusieurs circuits de sortie en connectant la ou les liaisons verticales correspondantes avec la liaison horizontale. Une vitesse de transmission sur une artère sortante peut être différente de celle existant sur une artère entrante.

L'en-tête ICVS de circuit virtuel de chaque cellule sortante est placée par l'unité de gestion UG, devant la cellule, avant passage de celle-ci à l'entrée du circuit FIFO du circuit de sortie correspondant.

Pour commander la matrice S/T et déterminer les ICVS à placer en tête des cellules sortantes, l'unité de gestion UG échange des données de signalisation avec l'environnement raccordé sur les artères entrantes et sortantes.

Les données de signalisation sont par exemple transmises dans des cellules de signalisation transportées par les artères entrantes et sortantes.

Les cellules de signalisation entrantes sont détectées comme telles par leur en-tête et transmises à l'unité de gestion UG par une liaison verticale particulière V0 de la matrice S/T aboutissant à un circuit de sortie particulier CS0 relié à l'unité de gestion UG, mais non connecté à une artère sortante. L'unité de gestion UG peut émettre des cellules de signalisation sur les artères sortantes en utilisant un circuit d'entrée particulier CE0, non connecté à une artère entrante, donnant accès à une liaison horizontale particulière H0 de la matrice S/T.

Les données de signalisation reçues sont utilisées pour mettre à jour des tables de routage permettant en particulier de fournir, pour chaque cellule entrante, le ou les circuits de sortie vers lequel, ou lesquels, elle doit être aiguillée.

Le système de commutation ne présente pas de blocage s'il est possible de donner accès à la matrice S/T à la fois à tous les circuits d'entrée et tous les circuits de sortie pendant le temps de transfert maximum T d'une cellule, ce temps de transfert maximum étant donné par la période minimale avec laquelle les cellules sont transmises sur les artères entrantes et sortantes. En d'autres termes, durant le temps T, la matrice S/T doit pouvoir offrir (n + p - 1) accès.

La présence de circuits permettant une gestion de file d'attente permet toutefois d'effectuer le transfert d'une cellule à travers la matrice entre une mémoire d'un circuit d'entrée quelconque et un circuit FIFO d'un circuit de sortie quelconque en un temps t inférieur à T, par exemple compris entre T/2 et T. La vitesse de transfert peut ainsi atteindre une valeur double de celle de la vitesse de transmission sur les artères entrantes et sortantes. Les cellules en cours de transfert sont transmises en synchronisme entre elles.

Pour chaque cellule entrante, l'unité de gestion UG détermine la liaison horizontale et la ou les liaisons verticales à utiliser sur la matrice S/T pour assurer, selon le cas, un transfert simple ou une diffusion. A cet effet, pour chaque période t, l'unité de gestion tient à jour une table d'occupation des liaisons horizontales et verticales de la matrice S/T. Lors d'une requête de transfert faisant intervenir une liaison horizontale et une ou plusieurs liaisons verticales, l'unité de gestion recherche la première période t où les liaisons requises sont simultanément disponibles et en marque l'occupation pour interdire ces liaisons à toute autre requête pour la période t considérée.

Les cellules en attente de transfert restent stockées dans les mémoires des circuits d'entrée.

Le circuit permet le transfert sans délai de cellules prioritaires. Lorsqu'une cellule prioritaire parvient au système sur une artère entrante, elle est reconnue par l'unité de gestion UG qui lui accorde un accès à la matrice S/T pour la première période t à venir. Le transfert des cellules non prioritaires est alors retardé, en bloc, de la durée t.

Cette disposition, permettant de gérer deux niveaux de priorité, est essentiellement destinée à acheminer des cellules transportant des données nécessitant un temps de transit minimum, par exemple la distribution de l'heure.

Des modes particuliers de réalisation d'un système de commutation dont le principe vient d'être exposé seront maintenant décrits de façon plus détaillée.

## PREMIER MODE DE REALISATION

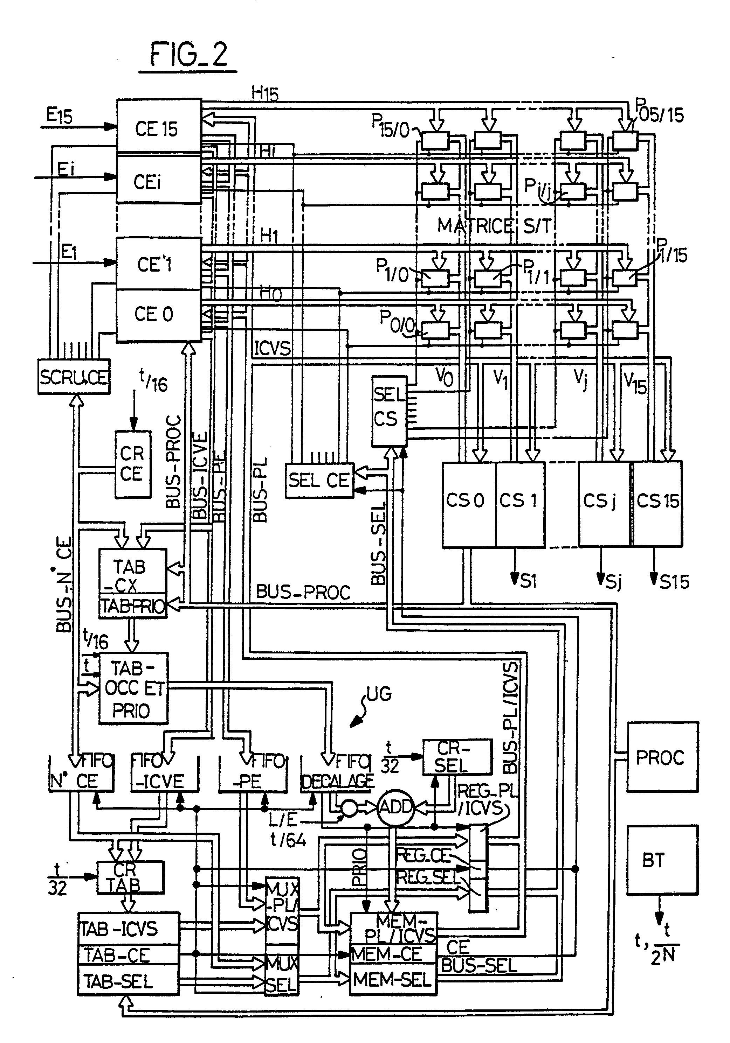

### Schéma fonctionnel d'ensemble (figure 2)

Dans cet exemple, le nombre d'artères entrantes est choisi égal à 15, de même que le nombre d'artères sortantes (n = p = 15).

Le fonctionnement du système de commutation est synchronisé par une base de temps BT qui fournit un signal d'horloge de période t ainsi que des signaux dont les périodes sont des sous-multiples de t ($t/2^N$, N prenant différentes valeurs entières).

Les noeuds de connexion entre les liaisons horizontales H0, H1, ..., Hi, ..., H15 et verticales V0, V1, ..., Vj, ..., V15 de la matrice S/T sont matérialisés par des portes Pi/j (P0/0 à P15/15). Le passage d'une cellule de la liaison horizontale Hi à la liaison verticale Vj s'effectue en validant, pendant la durée t, la porte Pi/j sous la commande conjuguée d'un signal de sélection horizontale provenant d'un circuit décodeur SEL CE et d'un signal de sélection verticale provenant d'un circuit décodeur SEL CS. L'information relative au noeud de connexion à valider est fournie aux circuits décodeurs SEL CE et SEC CS par l'unité de gestion UG par l'intermédiaire d'un bus BUS-SEL sur lequel est transmise une information de numéro de circuit d'entrée ou de sortie et d'un fil de sélection CE/CS sur lequel est transmise une information binaire validant soit le décodeur SEL CE, soit le décodeur SEL CS.

L'unité de gestion UG comprend un processeur de commande PROC dont le bus BUS-PROC est connecté aux circuits d'entrée et de sortie particuliers CE0 et CS0. Le processeur de commande reçoit ainsi par l'intermédiaire de la liaison V0 du circuit CS0, et du bus BUS-PROC, les cellules de signalisation provenant des artères entrantes et destinées à définir les connexions à établir entre artères entrantes et artères sortantes. Des cellules de signalisation peuvent à leur tour être transmises aux artères sortantes par le processeur de commande, par l'intermédiaire du bus BUS-PROC, du circuit CE0 et de la liaison horizontale H0.

Les cellules de signalisation reçues sont utilisées par le processeur de commande PROC pour mettre à jour des tables de routage. Celles-ci sont par exemple constituées par des mémoires RAM, connectées au bus BUS-PROC, et comprennent :
- une table de connexions TAB-CX qui fournit, pour chaque cellule entrante, le ou les circuits de sortie vers lequel, ou lesquels, il faudra l'aiguiller,
- une table de priorité TAB-PRIO comprenant un bit placé en face de chaque position dans la table de connexions TAB-CX et correspondant à une cellule à acheminer prioritairement,
- une table d'identification de circuit virtuel sortant TAB-ICVS qui fournit l'identificateur de circuit virtuel sortant ICVS pour le circuit de sortie vers lequel la cellule entrante doit être aiguillée, ou plusieurs ICVS s'il y a plusieurs circuits de sortie en cas de diffusion dans ce dernier cas, les ICVS correspondant à un même ICVE sont rangés dans des positions successives de la table TAB-ICVS (dans l'exemple présent, il peut y avoir jusqu'à 15 ICVS par ICVE),

- une table de sélection TAB-SEL qui, corrélativement à la table TAB-ICVS, fournit le numéro du circuit de sortie correspondant à chaque ICVS, et
- une table de pointage TAB-CE destinée à indiquer la position dans la table TAB-ICVS qui suit celle de rangement du dernier ICVS correspondant à un même ICVE.

Un compteur modulo 16, le compteur CR-CE, reçoit de la base de temps BT un signal de période de $t/16$. Le compteur CR-CE évolue donc de 0 à 15 sur chaque période t.

La sortie du compteur CR-CE pilote un circuit de scrutation SCRU-CE chargé de détecter les arrivées de cellules valides sur les circuits d'entrée CE1 à CE15. En réponse à la détection d'une cellule valide, le circuit de scrutation SCRU-CE commande la mémorisation, dans un circuit FIFO-N° CE de type FIFO, via un bus parallèle BUS-N° CE de la valeur du compteur indiquant le numéro du circuit d'entrée concerné. Parallèlement à ceci, le circuit d'entrée concerné fournit sur un bus parallèle BUS-ICVE l'identificateur de circuit virtuel ICVE correspondant à la cellule entrante valide détectée.

Cette valeur d'ICVE, d'une part, est stockée dans un circuit FIFO-ICVE de type FIFO et, d'autre part, est associée à la valeur du compteur CR-CE pour pointer dans les tables TAB-CX et TAB-PRIO. Ces deux tables fournissent respectivement le numéro ou les numéros du circuit de sortie ou des circuits de sortie sur lequel, ou lesquels, il faudra aiguiller la cellule entrante, et une information concernant la priorité de ce routage.

Comme déjà indiqué, la mise à jour des tables TAB-CX et TAB-PRIO a été effectuée à partir d'informations véhiculées par des cellules de signalisation précédemment reçues. Les cellules de signalisation identifiées comme telles par leur ICVE sont automatiquement aiguillées vers le circuit CS0 via la liaison V0, quel que soit le circuit d'entrée sur lequel elles sont reçues, la table de connexions TAB-CX étant préprogrammée à cet effet. Ces informations de signalisation sont reçues par le processeur de commande PROC, via le bus BUS-PROC. Le processeur de commande PROC, par l'intermédiaire de ce même bus BUS-PROC, charge en conséquence les tables TAB-CX et TAB-PRIO, ainsi que les tables TAB-ICVS, TAB-SEL et TAB-CE.

Les informations de numéro(s) de circuit(s) sortant(s) et de priorité lues dans les tables TAB-CX et TAB-PRIO en réponse à la réception d'une cellule entrante valide, et en fonction de l'ICVE de celle-ci et du numéro du circuit d'entrée sur lequel elle est reçue, sont transmises en parallèle à une table d'occupation et de priorité TAB-OCC ET PRIO. Ce dernier circuit, disposant en outre du numéro de circuit d'entrée par le bus BUS-CE et compte tenu, d'une part, de la priorité et, d'autre part, de l'occupation des noeuds de la matrice S/T, élabore un signal de décalage indiquant à quelle période de durée t la cellule pourra être transférée vers le ou les circuits de sortie voulus en empruntant la matrice S/T.

Si le signal PRIO est présent dans la table TAB-PRIO, le premier intervalle de temps t sera consacré au transfert de la cellule prioritaire. Si le signal PRIO n'est pas présent, l'information DECALAGE fournie par la table TAB-OCC ET PRIO correspond au nombre de périodes t au bout desquelles le transfert sera effectué compte tenu de l'occupation des liaisons de la matrice S/T pour les connexions restant à réaliser. L'information de priorité PRIO ou l'information DECALAGE est stockée dans un circuit FIFO-DECALAGE de type FIFO. En fait, l'information PRIO correspond à une information DECALAGE nulle.

Enfin, le circuit d'entrée désigné par le circuit de scrutation SCRU-CE fournit, sur un bus parallèle BUS-PE, la valeur du pointeur de rangement du champ d'information de la cellule entrante considérée dans la mémoire du circuit d'entrée. Cette valeur est stockée dans un circuit FIFO-PE de type FIFO.

L'ensemble des circuits FIFO-NOCE, FIFO-ICVE, FIFO-PE et FIFO-DECALAGE contient l'ensemble des informations concernant les cellules entrantes durant une période de scrutation correspondant à la période t. Ces circuits permettent, en combinaison avec les tables TAB-SEL et TAB-CE, de fournir les informations de sélection transmises aux décodeurs SEL-CE et SEL-CS, et identifiant les noeuds de la matrice S/T à valider.

Dans l'exemple considéré, et du fait que pendant une période de transfert t, chaque liaison horizontale et chaque liaison verticale de la matrice S/T peut n'être utilisée qu'une fois, les décodeurs fourniront au maximum chacun 16 signaux de sélection pendant cette période. Il y a donc au maximum 32 informations de sélection transmises séquentiellement sur le bus parallèle BUS-SEL pendant une période t. Ces informations de sélection contiennent sous forme binaire le numéro de la liaison horizontale ou de la liaison verticale de la matrice S/T devant être validée. Le fil de sélection supplémentaire CE/CS permet de valider le décodeur SEL-CE ou le décodeur SEL-CS selon que l'information binaire véhiculée par le fil CE/CS a la valeur 1 ou la valeur 0.

Il est supposé en outre qu'au-delà de 32 périodes de durée t la probabilité de perte d'une cellule par impossibilité de transfert est extrêmement faible. Afin de garder une visibilité sur les commutations de cellules sur 32 périodes t successives, il est donc nécessaire de mémoriser les informations de sélection à transmettre sur le bus BUS-SEL et le fil CE/CS sur ces 32 périodes.

A cet effet, il est prévu une mémoire de sélection MEM-SEL dans laquelle sont stockées, dans l'ordre où elles doivent être transmises, les 32 x 32 = 1 024 informations de sélection correspondant aux 1 024 connexions possibles à établir par les décodeurs SEL-CE et SEL-CS, pour les 32 périodes t à venir et une mémoire correspondante MEM-CE dans laquelle sont stockées les valeurs successives de l'information de sélection CE/CS sur la même durée.

Les deux mémoires MEM-SEL et MEM-CE sont adressées et lues, ou écrites, simultanément, en même temps qu'une mémoire MEM-PL/ICVS, également à 1 024 positions. Cette dernière fournit, sur un bus parallèle BUS-PL/ICVS, des informations successives qui représentent :
- lorsque l'information de sélection CE/CS est à 1, les valeurs PL d'un pointeur de lecture destiné à fournir, à la mémoire du circuit d'entrée désigné par le décodeur SEL-CE, l'adresse de la première information de la cellule à transférer, et
- lorsque l'information de sélection CE/CS est à 0, l'identificateur de circuit virtuel sortant ICVS à appliquer en tête de la cellule transférée vers le circuit de sortie désigné par le décodeur SEL-CS.

L'ensemble des mémoires MEM-SEL, MEM-CE et MEM-PL/ICVS est constitué par des circuits RAM. La lecture dans les mémoires s'effectue séquentiellement par l'évolution d'un compteur CR-SEL recevant de la base de temps BT un signal de période t/32, et relié à l'entrée d'adressage de ces mémoires par l'intermédiaire d'un additionneur ADD. Celui-ci a une première entrée reliée à la sortie du compteur CR-SEL et une deuxième entrée reliée à la sortie du circuit FIFO-DECALAGE par l'intermédiaire d'une porte P-L/E recevant un signal carré L/E de période t/64 fourni par la base de temps BT. La lecture dans les mémoires MEM-SEL, MEM-CE et MEM-PL/ICVS est effectuée pendant les périodes d'invalidation de la porte P-L/E, de sorte que la valeur du compteur CR-SEL est appliquée à l'ensemble de ces mémoires sans modification.

Les mémoires MEM-SEL, MEM-CE et MEM-PL/ICVS reçoivent des données issues des tables TAB-SEL, TAB-CE et TAB/ICVS dont le chargement a été précédemment effectué par le processeur de commande PROC à partir des informations de signalisation. Lesdites tables sont adressées simultanément par le contenu d'un compteur CR-TAB recevant un signal de période t/32 de la base de temps BT.

Initialement, au début d'une période t, le compteur CR-TAB est chargé par un couple de valeurs N°CE et ICVE provenant des circuits FIFO-N°CE et FIFO-ICVE. La combinaison de ces valeurs pointe sur les tables TAB-ICVS, TAB-CE et TAB-SEL.

Les valeurs lues dans les tables TAB-SEL et TAB-ICVS consistent dans l'information de sélection destinée au décodeur SEL-CS identifiant le circuit de sortie où la cellule reçue par le circuit d'entrée considéré doit être transférée, et dans l'identificateur de circuit virtuel sortant ICVS correspondant. Ces deux valeurs sont présentées aux entrées des mémoires MEM-SEL et MEM-PL/ICVS au travers de multiplexeurs MUX-SEL et MUX-PL/ICVS commandés par l'information binaire provenant de la table TAB-CE. Les mémoires MEM-SEL et MEM-PL/ICVS sont validées en écriture pour une adresse correspondant à la valeur du compteur CR-SEL à laquelle est ajoutée par l'additionneur ADD la valeur lue dans le circuit FIFO-DECALAGE, la porte P-L/E étant validée par le signal L/E.

Le chargement dans les mémoires MEM-PL/ICVS et MEM-SEL s'effectue ainsi avec un certain décalage d'adresse par rapport à la position du compteur CR-SEL. Les informations qui viennent d'être enregistrées dans ces mémoires ne seront donc lues qu'au bout d'un temps équivalent à un nombre de périodes t égal à la valeur qui était contenue dans le circuit FIFO-DECALAGE. Pour chaque intervalle de temps t/32, les mémoires MEM-PL/ICVS et MEM-SEL sont écrites et lues successivement, le signal L/E prenant successivement les valeurs 1 et 0 durant chaque intervalle t/64 correspondant.

Après rangement dans les mémoires MEM-SEL et MEM-PL/ICVS, de nouvelles valeurs peuvent être lues dans les tables TAB-SEL, TAB-CE et TAB-ICVS. Le compteur CR-TAB évolue d'une unité afin de sélectionner la position suivante.

Dans la mesure où la valeur binaire lue dans la table TAB-CE n'indique alors pas la fin d'une séquence, - c'est-à-dire qu'il y a diffusion de la cellule entrante considérée vers au moins un autre circuit de sortie -, un nouveau couple de valeurs d'information de sélection pour le décodeur SEL/CS et d'identificateur ICVS est lu et chargé dans les mémoires MEM-SEL et MEM-PL/ICVS. Le nombre de circuits de sortie étant égal à 15 dans l'exemple considéré, cette séquence pourra se reproduire au maximum 14 fois.

Lorsque le dernier couple de valeurs SEL/CS et ICVS correspondant à une même cellule entrante aura été extrait, la position suivante dans les tables TAB-SEL et TAB-ICVS est vide. Par contre, dans cette position suivante, la table TAB-CE contient un élément binaire indiquant la fin de la séquence. Le chargement de valeur de cet élément binaire provoque la commutation de la sortie du multiplexeur MUX-SEL sur la sortie du circuit FIFO-N°CE (au lieu de la sortie de la table TAB-SEL) et la commutation de la sortie du multiplexeur MUX-PL/ICVS sur la sortie du circuit FIFO-PE (au lieu de la sortie de la table TAB-ICVS).

La présence de l'élément binaire indicatif de fin de séquence dans la table TAB-CE provoque également une lecture des circuits FIFO-N°CE, FIFO-ICVE, FIFO-PE et FIFO-DECALAGE et un nouveau chargement du compteur CR-TAB. Ainsi, la position adressée en MEM-SEL recevra le numéro de circuit d'entrée issu du circuit FIFO-N°CE et la position adressée en MEM-PL/ICVS recevra du circuit FIFO-PE la valeur du pointeur qui a servi à enregistrer dans le circuit d'entrée le début du champ d'information de la cellule entrante, afin de réutiliser cette valeur pour le pointeur de lecture PL.

Corrélativement, l'élément binaire issu de TAB-CE est enregistré dans la mémoire MEM-CE. Cette dernière est adressée en lecture et en écriture de la même manière que les mémoires MEM-PL/ICVS et MEM-SEL. Ainsi, le décodeur SEL-CE n'est sélectionné qu'à la fin de chaque séquence, c'est-à-dire après que la cellule entrante considérée a été transférée vers le, ou, successivement vers chacun des circuits de sortie voulus. Le système de commutation est donc spécifiquement adapté à la fonction de diffusion des cellules entrantes.

Dans le cas où l'information lue dans le circuit FIFO-DECALAGE est un signal de priorité PRIO (décalage 0), le fonctionnement du compteur CR-SEL et des mémoires MEM-PL/ICVS, MEM-CE et MEM-SEL est alors bloqué durant une période t. La sortie des tables TAB-ICVS, TAB-CE et TAB-SEL s'effectue alors directement vers le bus BUS-PL/ICVS, le fil CE/CS et le bus BUS-SEL au travers de registres respectifs REG-PL/ICVS, REG-CE/CS et REG-SEL validés par le signal PRIO.

Si plus de deux niveaux de priorité sont désirés, il faut, pour chaque niveau de priorité supplémentaire, créer une chaîne identique contenant les éléments suivants : table TAB-OCC ET PRIO, circuit FIFO-DECALAGE, compteur CR-SEL, additionneur ADD et mémoires MEM-PL/ICVS, MEM-CE et MEM-SEL. La chaîne la plus prioritaire bloquerait le fonctionnement des autres chaînes jusqu'à épuisement de son contenu, puis le niveau de priorité immédiatement inférieur serait validé, et ainsi de suite.

Une description plus détaillée de certains circuits du système de commutation de la figure 2 sera maintenant donnée.

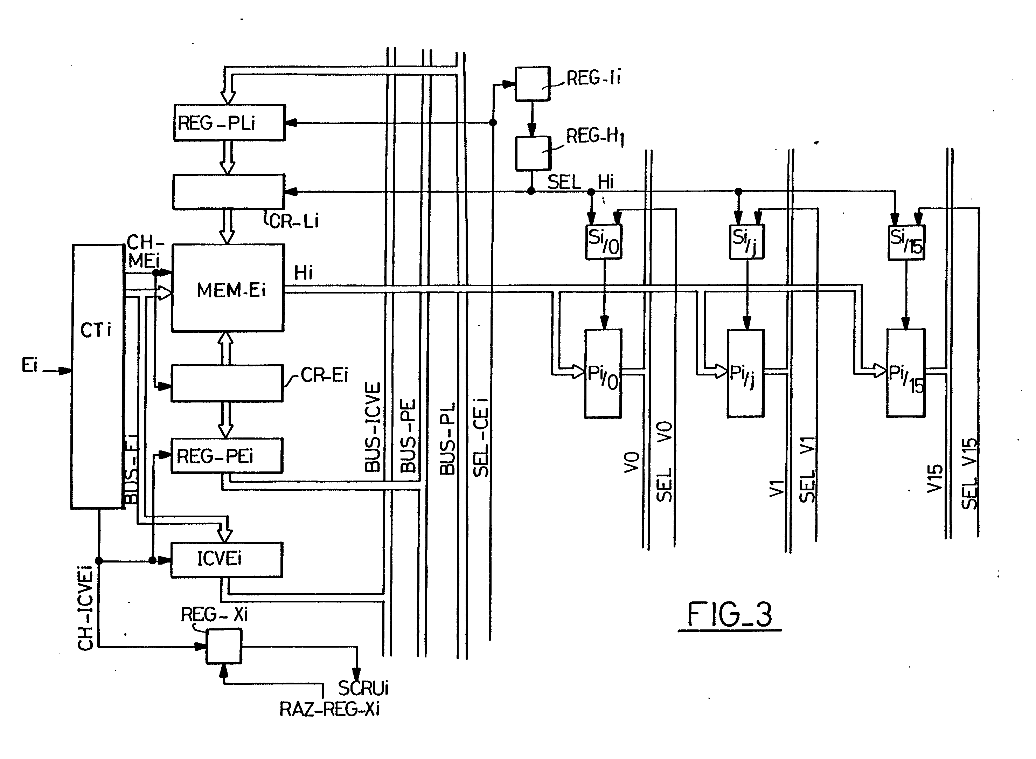

## Circuit d'entrée (figure 3)

Un seul circuit d'entrée Ci sera décrit, les autres ayant une structure identique. L'artère entrante Ei aboutit à un circuit de traitement CTi qui, de façon connue, réalise :
- la démodulation du signal reçu avec récupération de l'horloge d'arrivée pour synchroniser toutes les fonctions du circuit de traitement CTi,
- gestion et vérification des cellules entrantes avec élimination des cellules vides, et
- mise sous forme d'octets du contenu des cellules entrantes avec commutation des octets successifs sur un bus parallèle BUS-Ei.

Le circuit de traitement CTi produit en outre :
- un signal de commande CH-ICVEi pour commander le chargement de l'indicateur de circuit virtuel entrant ICVE, placé en tête d'une cellule entrante, dans un registre parallèle REG-ICVEi connecté au bus BUS-Ei, et
- un signal de commande CH-MEi pour commander le chargement du premier octet du champ d'information suivant l'ICVEi, dans une mémoire d'entrée MEM-Ei connectée au bus BUS-Ei et adressée par un compteur d'écriture CR-Ei la retombée du signal CH-MEi sert à faire évoluer le compteur CR-Ei et tout le champ d'information de la cellule entrant est chargé octet par octet dans la mémoire MEM-Ei avec évolution corrélative du compteur CR-Ei.

La mémoire MEM-Ei est une mémoire à double accès susceptible de stocker toutes les cellules valides entrant sur la liaison Ei durant 32 périodes t successives, ce qui correspond à la capacité globale d'attente du système.

Le signal CH-ICVEi sert également à positionner à 1 un registre unitaire REG-Xi relié au circuit de scrutation SCRU-CE par une liaison SCRUi, et à transférer le contenu du compteur d'écriture CR-Ei dans un registre parallèle REG-PEi.

Le circuit de scrutation SCRU-CE lit successivement, pendant chaque période t, la sortie des registres REG-X0, REG-Xi, ..., REG-X15. Dans le circuit d'entrée CEi, l'arrivée d'une cellule valide ayant fait passer le registre REG-Xi à 1, la sortie SCRUi de celui-ci est prise en compte par la première interrogation du circuit de scrutation. Celui-ci remet alors à zéro le registre REG-Xi par un signal sélectif RAZ-REGXi et transfère les contenus des registres REG-ICVEi et REG-PEi respectivement sur les bus BUS-ICVE et BUS-PE, à destination des circuits correspondants FIFO-ICVE et FIFO-PE.

L'unité de gestion UG dispose alors des informations qui lui sont nécessaires pour déterminer le routage de la cellule correspondante.

Durant l'intervalle de temps t précédant celui du transfert de cette cellule, le circuit décodeur SEL-CE fournit sur un fil SEL-CEi un bit qui est mémorisé dans un registre REG-Ii. Ce bit est transféré dans un registre REG-Hi au début de la période t suivante. Pendant toute cette période, la sortie du registre REG-Hi est validée et fournit un signal SEL-Hi de sélection de la liaison horizontale Hi.

Le bit de sélection SEL-CEi sert également à transférer dans un registre REG-PLi la valeur de pointeur de lecture PLi transportée par le bus BUS-PL/ICVS. La valeur PLi est chargée dans un compteur de lecture CR-Li au début de ladite période t suivante. A ce moment-là, le signal SEL-Hi valide le compteur CR-Li qui va pointer dans la mémoire MEM-Ei sur l'adresse du début du champ d'information de la cellule à transférer. La cellule va alors être extraite, octet par octet, et transmise pendant la période t sur la liaison horizontale Hi connectée à la mémoire MEM-Ei.

En même temps, le ou les circuits de sortie déstinataires de la cellule à transférer émettent des bits de sélection de liaisons verticales sur des fils correspondants parmi SEL-V0, SEL-Vj, ..., SEL-V15. Des portes Si/0, ..., Si/j, ..., Si/15 de type ET à deux entrées reçoivent le signal SEL-Hi sur une première entrée et, respectivement, les signaux SEL-V0 à SEL-V15 sur leur deuxième entrée.

Chaque porte Si/j validée autorise la porte correspondante Pi/j à commuter la liaison horizontale Hi sur la liaison verticale Vj durant toute la période t correspondante. Le champ d'information de la cellule entrante stocké en MEM-Ei est ainsi transféré, octet par octet, vers le ou les circuit(s) de sortie validé(s).

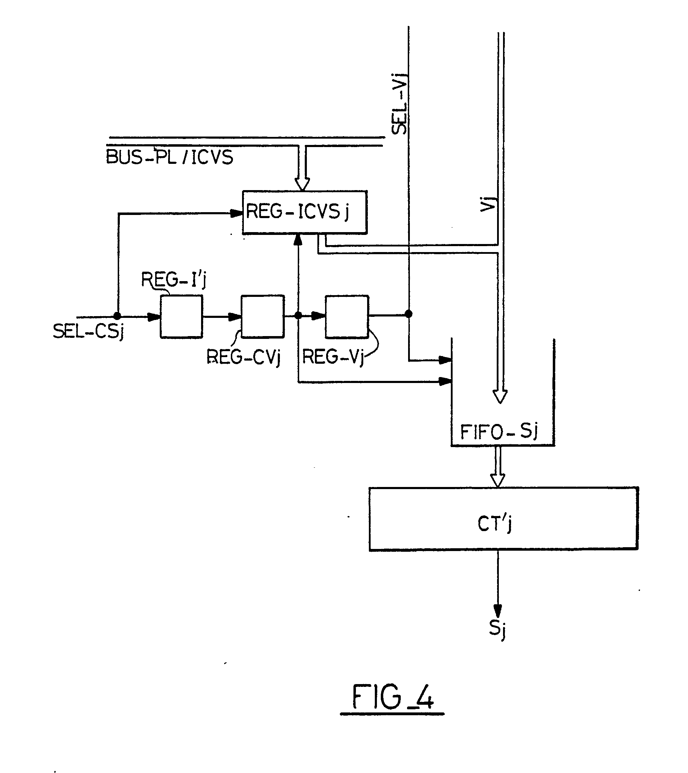

### Circuit de sortie (figure 4)

Les circuits de sortie CS1, ..., CSj, ..., CS15 étant identiques, un seul d'entre eux, CSj, sera décrit.

Le bit de sélection SEL-CSj venant du décodeur SEL-CS valide le transfert de l'indicateur de circuit virtuel sortant ICVS, transporté par le bus BUS-PL/ICVS dans un registre parallèle REG-ICVSj. En même temps, le bit SEL-CSj positionne à 1 un registre unitaire REG-I'j.

Au tout début de la période t suivante, la sortie du registre REG-I'j est transférée dans un registre unitaire REG-CVj dont la sortie valide le transfert, en parallèle, du contenu du registre REG-ICVSj dans le circuit FIFO-Sj du circuit de sortie CSJ. Ce transfert terminé, le contenu du registre REG-CVj est transféré dans un registre unitaire REG-Vj qui fournit le signal SEL-Vj de sélection de la liaison verticale correspondante Vj. C'est à cet instant que le circuit Si/j valide le transfert dans le circuit FIFO-Sj du champ d'information de la cellule. Celui-ci se trouve donc rangé immédiatement derrière l'ICVS qui lui est attribué.

Le rôle du circuit FIFO-Sj se borne à adapter la vitesse de transfert entre la liaison verticale Vj et l'artère sortante Sj connectée au circuit CSj. Dans le cas où la période t serait égale à la période T de transmission des cellules sur l'artère Sj, le circuit FIFO-Sj pourrait être supprimé.

Un circuit de traitement CT'j est interposé entre le circuit FIFO-Sj et l'artère Sj. Le circuit CT'j est chargé de gérer, de façon classique, la transmission sur l'artère sortante Sj. En particulier, le circuit CT'j est chargé de générer un en-tête des cellules sortantes, devant l'ICVS, de générer des cellules vides en cas d'absence de cellule à transmettre, et de moduler le signal en sortie après mise en série du flux de données.

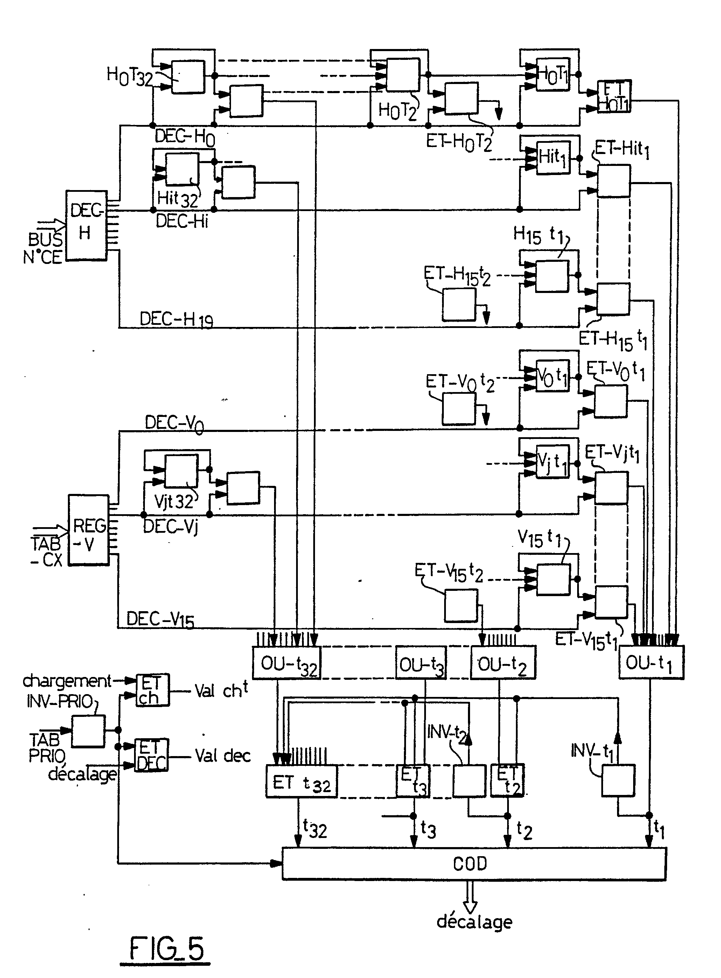

### Table d'occupation et de priorité (figure 5)

La fonction de cette table est de fournir le signal DECALAGE à partir du numéro de circuit d'entrée fourni par le bus BUS-N° CE, et du ou des numéros de circuit(s) de sortie à connecter fourni(s) par la table TAB-CX, tout en tenant compte du signal de priorité, fourni par la table TAB-PRIO, qui rend nulle la valeur du signal DECALAGE.

Une valeur du signal DECALAGE doit être déterminée pour chaque cellule entrante. Le processus doit donc être très rapide et est avantageusement réalisé par traitement parallèle.

Le retard maximum que l'on peut apporter au transfert d'une cellule entrante étant de 32 périodes t, la table TAB-OCC ET PRIO doit mémoriser l'état d'occupation de la matrice de connexion S/T sur 32 périodes t. Pour chacune des périodes t, il faut mémoriser l'état des 16 liaisons horizontales H0 à H15 et des 16 liaisons verticales V0 à V15. Ceci est obtenu à l'aide d'un registre à décalage à 32 positions affecté à chaque liaison horizontale et à chaque liaison verticale. En fin de chaque période t, chacun de ces registres est décalé d'une position afin d'effacer l'état de la période t révolue et d'autoriser l'accès à une nouvelle période t.

Ainsi, pour une liaison considérée horizontale Hi ou verticale $V_j$, chacune des positions du registre à décalage correspondant représente l'occupation de cette ligne pour chacune des 32 périodes t à venir. Les registres à décalage associés aux liaisons horizontales Hi sont formés de 32 cellules Hit1 à Hit32 tandis que les registres à décalage associés aux liaisons verticales $V_j$ sont formés de 32 cellules Vjt1 à Vjt32. L'indication d'occupation de la liaison horizontale Hi à $k^{ème}$ période t à venir est matérialisée par la mise à la position binaire 1 de la cellule Hitk. De même, l'indication d'occupation de la liaison horizontale $V_j$ à la $m^{ème}$ période t à venir est matérialisée par la mise à la position binaire 1 de la cellule Vjtm. Un zéro binaire dans la cellule Hitk ou la cellule Vjtm signifierait, en revanche, que la liaison ffi est disponible lors de la $k^{ème}$ période t à venir ou que la liaison Vj est disponible lors de la $m^{ème}$ période t à venir.

Pour arriver à ce résultat, les états successifs des demandes provenant du bus BUS-N° CE sont décodés par un circuit DEC-H ayant 16 sorties reliées à des lignes de sélection horizontale respectives DEC-H0 à DEC-H15. De même, la sortie de la table TAB-CX indiquant, pour chaque demande provenant du bus BUS-N° CE, les artères sortantes à connecter au circuit d'entrée ayant le numéro considéré, est prise en compte par un registre REG-V à 16 positions, chacune d'elles correspondant à une artère sortante. Chaque position du registre REG-V est reliée à une ligne de sélection verticale respective DEC-V0 à DEC-V15.

Chaque ligne de sélection DEC-Hi peut introduire une information dans une cellule quelconque du registre à décalage associé à la liaison horizontale correspondante Hi. Ainsi, pour les 32 périodes à venir, l'occupation des 16 liaisons horizontales est mémorisée dans les 32 x 16 = 512 cellules H0t1 à H15t32. De même, chaque ligne de sélection DEC-V$_j$ peut introduire une information dans une cellule quelconque du registre à décalage associé à la liaison verticale correspondante Vj de sorte que, pour les 32 périodes t à venir, l'occupation des 16 liaisons verticales est mémorisée dans les 512 cellules V0t1 à V15t32.

Lorsqu'une cellule entrante est détectée par le circuit de scrutation SCRU-CE, le circuit TAB-OCC ET PRIO est chargé de lui trouver le plus tôt possible un chemin dans la matrice de connexion S/T. Pour ce faire, les sélections exigées pour la commutation de la cellule (sélection d'une liaison horizontale à partir de l'information véhiculée par le bus BUS-N° CE et d'une ou plusieurs liaisons verticales à partir de l'information reçue de la table TAB-CX) sont comparées avec les chemins disponibles durant la $1^{ère}$ période t à venir.

Cette comparaison est effectuée entre les sorties des cellules H0T1 à H15t1 et, respectivement, les lignes DEC-H0 à DEC-H15, au moyen de circuits ET respectifs ET-H0t1 à ET-H15t1, ainsi qu'entre les sorties des cellules V0t1 à V15t1 et, respectivement, les lignes DEC-V0 à DEC-V15 au moyen de circuits ET respectifs ET-V0t1 à ET-V15t1.

Si les sorties des 32 circuits ET-H0T1 à ET-H15t1 et ET-V0t1 à ET-V15t1 sont basses, c'est que la commutation est possible lors de la prochaine période t. Ce fait est matérialisé par un niveau haut en sortie d'un circuit OU inversé OUt1 ayant 32 entrées reliées respectivement aux sorties des 32 circuits ET précités. Dans ce cas, la ligne de sélection DEC-Hi correspondant au circuit d'entrée considéré provoque le chargement de la cellule Hit1 et la ou les lignes de sélection verticale correspondantes DEC-V$_j$ provoquent le chargement de la ou des cellules Vjt1. Les commutations nécessaires au transfert de la cellule entrante sont alors mémorisées.

Si l'une quelconque des sorties des 32 circuits ET-H0t1 à ET-H15t1 et ET-V0t1 à ET-V15t1 est au niveau haut, la sortie du circuit OU inversé OUt1 est au niveau bas, ce qui signifie qu'une demande de sélection arrive sur une liaison déjà occupée. Une comparaison est alors effectuée entre les sélections exigées pour la commutation de la cellule entrante et les chemins disponibles durant la $2^{ème}$ période t à venir. Cette comparaison est effectuée entre les sorties des cellules H0t2 à H15t2 et respectivement, les lignes DEC-H0 à DEC-H15 au moyen de circuits ET respectifs ET-H0t2 à ET-H15t2, ainsi qu'entre les sorties des cellules V0t2 à V15t2 et, respectivement, les lignes DEC-V0 à DEC-V15 au moyen de circuits ET respectifs ET-V0t2 à ET-V15t2. Les sorties de ces 32 circuits ET sont reliées aux 32 entrées d'un circuit OU inversé OUt2. Si la sortie du circuit OUt2 est au niveau haut, les commutations nécessaires au transfert de la cellule entrante sont mémorisées par chargement des cellules Hit2 et Vjt2 concernées sinon, le processus est poursuivi en essayant la $3^{ème}$ période t à venir, et ainsi de suite jusqu'à la $32^{ème}$ période t qui ne devrait être atteinte qu'avec une probabilité très faible. En cas de débordement au-delà de la $32^{ème}$ période à venir, un signal d'anomalie est transmis au processeur de commande PROC.

Les sorties des circuits OU inversé OUt1, OUt2, OUtP, ..., OUt32 sont reliées à un circuit transcodeur COD qui fournit, sous forme d'un signal binaire, la valeur du décalage à apporter au transfert considéré. Cette valeur DECALAGE est transmise au circuit FIFO-DECALAGE.

Afin d'effectuer le processus de recherche décrit ci-avant dans un temps minimum, toutes les opérations de comparaison pour les différentes périodes t ne s'effectuent pas séquentiellement, mais en parallèle. Il est nécessaire de marquer l'occupation pour le transfert considéré à la période t la plus proche possible. Pour ce faire, l'entrée d'une porte inverseuse INVt1 est connectée à la sortie du circuit OU inversé OUt1 et a sa sortie reliée à une entrée d'une porte ET-t2 de type ET à deux entrées dont l'autre entrée est reliée à la sortie du circuit OUt2 et dont la sortie est reliée au circuit transcodeur COD. Ainsi, un signal au niveau haut en sortie de OUt1, indiquant que le transfert peut être effectué lors de la $1^{ère}$ période t, interdit la prise en compte de la sortie du circuit OUt2 par le transcodeur COD. La sortie t1 du circuit OUt2 et la sortie t2 du circuit ETt2, inversée par une porte inverseuse INVt2, sont reliées respectivement à deux entrées d'une porte ET à trois entrées ETt3 dont la troisième entrée reçoit le signal de sortie du circuit OUt3 et dont la sortie t3 est reliée au transcodeur COD. De proche en proche, les sorties t1, t2, ..., tq interdisent la sortie t (q + 1), si l'une d'entre elles est invalidée.

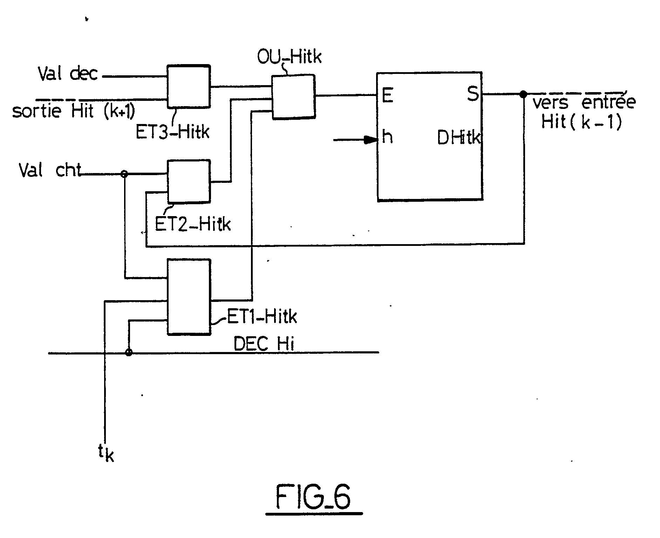

Un schéma montrant de façon détaillée une cellule Hitk d'un registre à décalage associé à une liaison horizontale Ni est donné par la figure 6. Une cellule Vjtm d'un registre à décalage associé à une liaison verticale Vj a une structure analogue.

L'élément de mémorisation de la cellule ffitk est une bascule DHitk recevant une impulsion d'horloge h lors d'un chargement ou lors d'un décalage. L'entrée E de la cellule est reliée à la sortie d'un circuit OU à trois entrées OU-Hitk. Les entrées du circuit OU-Hitk sont reliées aux sorties de trois portes ET, respectivement ET1-Hitk, ET2-Hitk et ET3-Hitk.

Le chargement de la cellule Hitk est effectué à partir de la porte ET1-Hitk lorsque le signal tk est validé, à l'aide d'un signal logique de fonctionnement normal Val-Cht. La porte ET1-Hitk reçoit, outre les signaux tk et Val-Cht, le signal de la ligne DEC-Hi. La sortie de la porte ET1-Hitk passe donc au niveau haut lorsque le signal tk est validé, le signal Val-Cht est au niveau haut, et le signal sur la ligne DEC-Hi est également au niveau haut.

Dans le cas où le signal sur la ligne de sélection est au nivau 0 et que la bascule DHitk est déjà chargée, la valeur 1 de la bascule doit être conservée. Ceci est obtenu au moyen de la porte ET2-Hitk qui reçoit le signal Val-Cht ainsi que le signal sur la sortie S de la bascule. La porte ET2-Hitk réinjecte ainsi la sortie de la bascule sur son entrée en présence du signal Val-Cht.

En fin de période t, la cellule Hitk doit voir son contenu transféré dans la cellule Hit (k-1) et doit recevoir le contenu de la cellule Hit (k + 1). Ceci est réalisé par la porte ET3-Hitk qui reçoit le signal de sortie de la cellule Hit (k + 1) et un signal Val-Dec de validation de décalage.

Si la table TAB-PRIO fournit un signal de priorité PRIO, celui-ci est inversé par une porte inverseuse INV-PRIO (figure 5) dont la sortie bloque alors des portes ET à deux entrées ET-Cht et ET-Dec. Ces deux portes reçoivent respectivement des signaux de chargement Cht et de décalage Dec et fournissent les signaux Val-Cht et Val-Dec en l'absence du signal PRIO.

Le signal PRIO force le transcodeur COD pour imposer en sortie de celui-ci la valeur de décalage zéro. Le contenu de la table TAB-OCC ET PRIO reste ainsi figé pendant la période t de commutation de la cellule entrante prioritaire.

Les signaux de chargement Cht et de décalage Dec sont issus de la base de temps BT et ont des périodes respectivement égales à t/16 (un chargement possible pour chaque scrutation d'un circuit d'entrée) et à t (un décalage pour chaque nouvelle période de transfert).

La réalisation du système de commutation décrit ci-dessus fait avantageusement appel à la technologie CMOS afin d'obtenir des performances élevées avec une faible consommation. Les circuits de type FIFO et les mémoires de type RAM à double accès sont des composants du commerce tels que ceux fournis par la société des Etats-Unis d'Amérique Integrated Device Technology. La table TAB-OCC et PRIO est avantageusement constituée par un circuit intégré conçu à la demande (circuit "ASIC") afin d'accroître la rapidité tout en réduisant le coût, l'encombrement et la consommation.

## DEUXIEME MODE DE REALISATION

Les éléments communs au premier et au deuxième modes de réalisation portent les mêmes références et ne seront pas à nouveau décrits de façon détaillée.

Le deuxième mode de réalisation se distingue en particulier du premier par une simplification de l'unité de gestion, au prix de modifications des circuits d'entrée, des circuits de sortie et de la matrice de connexion S/T.

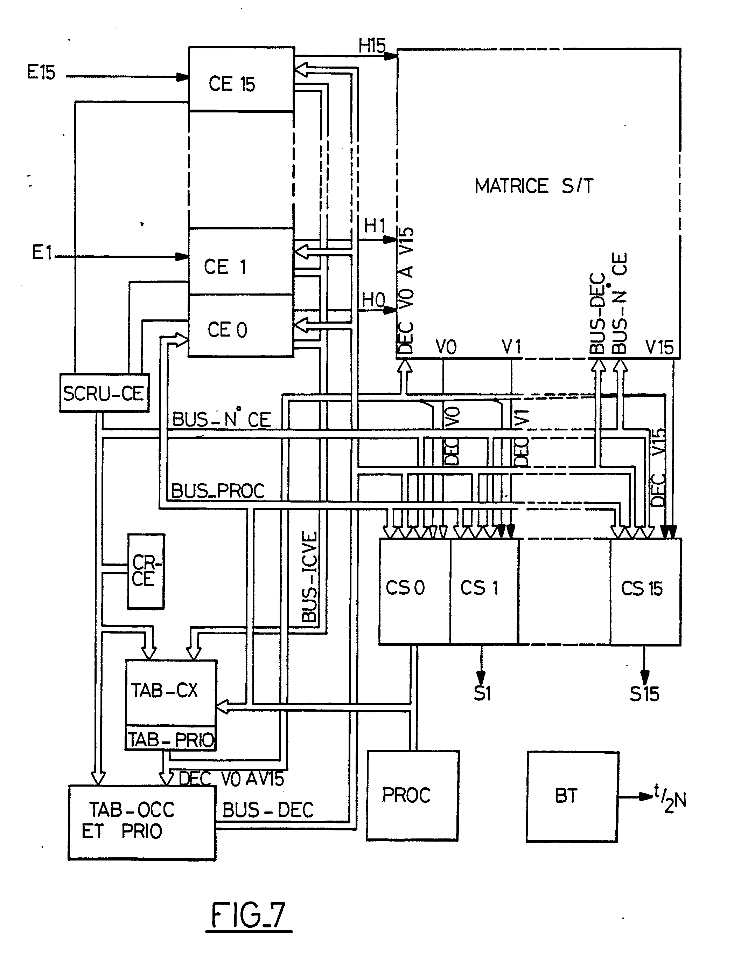

### Schema fonctionnel d'ensemble (figure 7)

On retrouve, comme sur la figure 2, des circuits d'entrée CE0, dont l'entrée est reliée au bus BUS PROC du processeur de commande PROC, et CE1 à CE15 dont les entrées sont reliées aux artères entrantes E1 à E15, et des circuits de sortie CS0, dont la sortie est reliée au bus BUS PROC, et CS1 à CS15 dont les sorties sont reliées aux artères sortantes S1 à S15.

Le circuit SCRU-CE de scrutation des circuits d'entrée évolue sous le contrôle du compteur CR-CE. Le BUS-N° CE en sortie de ce dernier, ainsi que le bus BUS-ICVE relié aux circuits d'entrée, pointent sur la table de connexion TAB-CX et la table de priorité TAB-PRIO.

Les sorties des tables TAB-CX et TAB-PRIO, ainsi que le bus BUS-N° CE sont reliées à la table d'occupation et de priorité TAB-OCC ET PRIO qui conserve la même fonction. Toutefois, le signal DECALAGE en sortie de cette dernière est appliqué directement aux circuits d'entrée CE0 à CE15 et aux circuits de sortie CS0 à CS15 par l'intermédiaire d'un bus BUS-DEC.

Les circuits de sortie CS0 à CS15 sont également reliés au bus BUS-PROC et au bus BUS-N° CE. En outre, chaque circuit CS0, ..., CSj, ..., CS15 peut être sélectionné par une liaison respective DEC-V0, ..., DEC-Vj, ..., DEC-V15 provenant de la table de connexion TAB-CX.

La matrice de connexion S/T est reliée aux circuits d'entrée CE0 à CE15 par des liaisons unifilaires respectives Ho à H15 et aux circuits de sortie CS0 à CS15 par des liaisons unifilaires respectives V0 à V15. L'utilisation de liaisons unifilaires, à la place de liaisons multifilaires comme dans le mode de réalisation précédent, permet de réduire le nombre d'accès à la matrice S/T, facilitant ainsi sa réalisation, mais ceci au prix d'un accroissement de la vitesse de transmission sur ces accès.

La sélection des connexions dans la matrice S/T est obtenue à partir des informations fournies par le compteur CR-CE, via le bus BUS-N° CE, du signal DECALAGE, transmis par le bus BUS-DEC, et des informations de sélection transmises par les liaisons DEC-V0 à DEC-V15.

La base de temps BT conserve la même fonction que dans le mode de réalisation précédent.

Des circuits du système de commutation de la figure 7 seront maintenant décrits de façon plus détaillée.

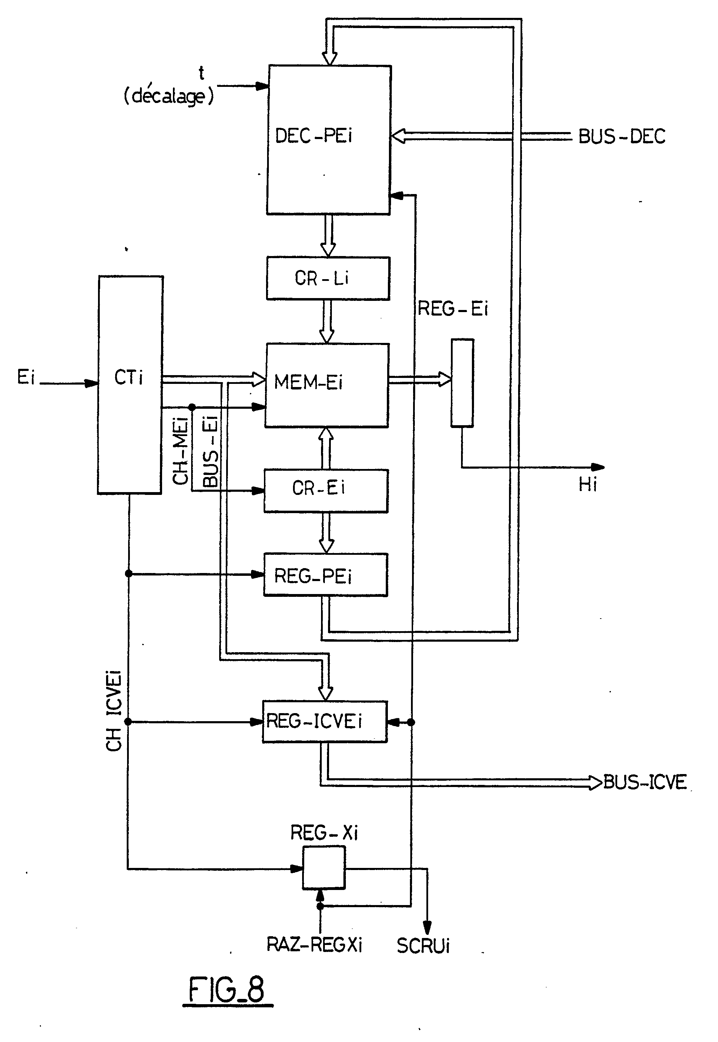

## Circuits d'entrée (figure 8)

Comme dans le mode de réalisation précédent, l'artère entrante Ei connectée au circuit CEi parvient au circuit de traitement CTi qui commande, par le signal CH-ICVEi, le chargement de l'ICVEi de la cellule entrante, dans le registre parallèle REG-ICVEi, et, par le signal CH-MEi, le chargement de la cellule entrante, dans la mémoire d'entrée à double accès MEM-Ei. Le bus BUS-Ei relie le circuit CTi au registre REG-ICVEi et à la mémoire MEM-Ei. Le registre REG-ICVEi est relié au bus BUS-ICVE. On notera que la cellule entrante est ici chargée dans la mémoire MEM-Ei avec son en-tête contenant l'ICVE.

Le signal CH-ICVEi positionne le registre REG-Xi qui est relié au circuit de scrutation SCRU-CE par une liaison SCRUi et reçoit de ce dernier un signal de remise à zéro RAZ-REGXi.

L'accès dans la mémoire MEM-Ei en écriture et en lecture se fait à des adresses fournies par les compteurs CR-Ei et CR-Li. Le contenu PEi du compteur d'écriture CR-Ei est chargé dans un registre REG-PEi sous la commande du signal CH-MEi.

A la différence du mode de réalisation précédent, la sortie de la mémoire-tampon MEM-Ei est reliée à un registre parallèle/série REG-Ei dont la sortie série est reliée à la liaison horizontale unifilaire Hi de la matrice S/T.

En outre, la sortie du registre REG-PEi mémorisant la position de l'en-tête des cellules dans la mémoire MEM-Ei est reliée à un circuit particulier DEC-PEi chargé de mémoriser localement les positions des en-têtes des cellules entrantes successives. Ce circuit comporte autant de positions de rangement que de cellules pouvant être stockées en attente de transfert, c'est-à-dire 32 dans l'exemple ici considéré.

Le rangement, dans le circuit DEC-PEi, de la position PEi dans la mémoire MEM-Ei de l'en-tête d'une cellule, est effectué dans une position dont le décalage par rapport à la sortie du circuit est déterminé par l'information de décalage reçue du bus BUS-DEC. Le chargement est commandé par le signal RAZ-REGXi qui est produit après reconnaissance d'une cellule entrante validée par le circuit SCRU-CE.

Le circuit de mémorisation DEC-PEi comprend une entrée de décalage recevant le signal d'horloge de période t. A chaque période t, les informations contenues dans le circuit DEC-PEi sont simultanément décalées d'une position de rangement vers la sortie de ce circuit. Cette sortie est reliée au compteur de lecture CR-Li.

Ainsi, le compteur de lecture CR-Li reçoit du circuit DEC-PEi l'adresse de l'en-tête d'une cellule à transférer enregistrée dans la mémoire MEM-Ei, après un nombre de périodes t, suivant cet enregistrement, qui correspond au décalage déterminé par la table TAB-OCC ET PRIO.

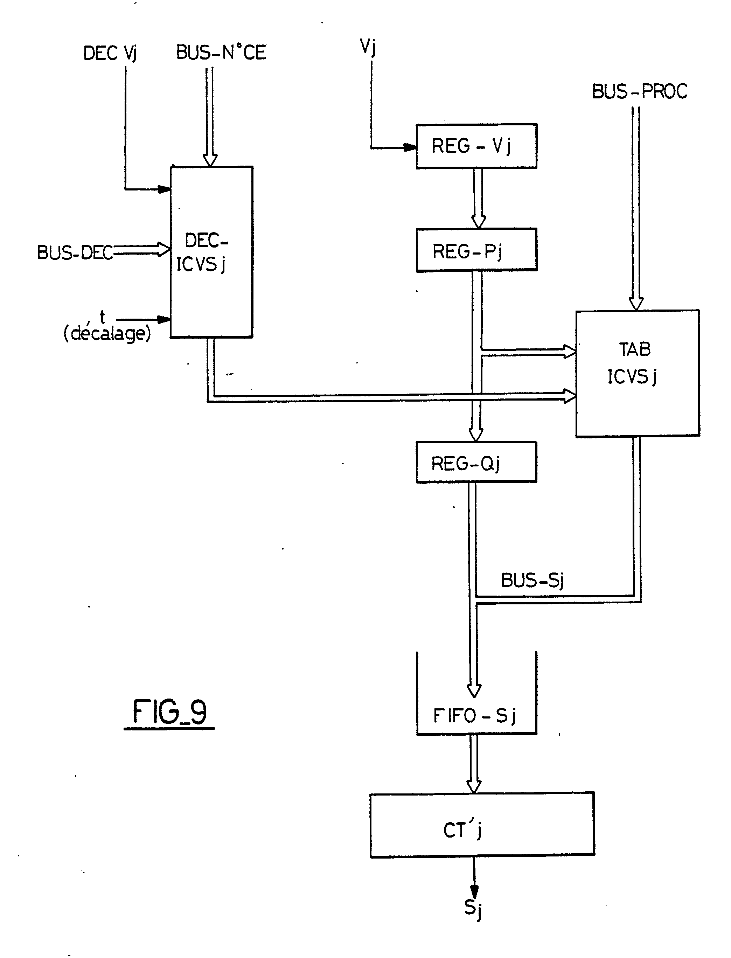

## Circuit de sortie (figure 9).

Le circuit de sortie CSj présente en commun avec celui du premier mode de réalisation seulement le circuit FIFO-Sj et le circuit de traitement CT'j qui gère la transmission vers l'artère sortant Sj.

La liaison verticale unifilaire Vj provenant de la matrice de connexion S/T aboutit à un registre série-parallèle REG-Vj. Chaque fois que ce registre est rempli, son contenu est transféré en parallèle à un registre parallèle intermédiaire REG-Pj dont la sortie est reliée à un autre registre parallèle REG-Qj. La sortie de ce dernier est reliée à un bus BUS-Sj.

Chaque circuit de sortie comporte une mémoire individuelle TAB-ICVSj qui peut être du type RAM (à accès aléatoire) ou du type adressable par son contenu. Les mémoires TAB-ICVSj, chargées par le bus BUS-PROC contiennent les identificateurs de circuit virtuel ICVS des cellules sortantes.

Lorsqu'une cellule traverse la matrice de connexion S/T, son en-tête contenant l'ICVE est d'abord stockée dans le registre REG-Pj. La sortie de celui-ci, en association avec le numéro de circuit d'entrée provenant du bus BUS-N° CE, adresse la mémoire TAB-ICVSj en lecture, ce qui permet de sélectionner l'ICVS à placer en-tête de la cellule sortante. Cet ICVS est acheminé par le bus BUS-Sj dans le circuit FIFO-Sj.

Le champ d'information de la cellule est ensuite transféré dans le même circuit FIFO-Sj via les registres REG-Pj, REG-Qj et le bus BUS-Sj.

Le chargement des mémoires TAB-ICVSj est effectué par le processeur de commande via le bus BUS-PROC. Comme précédemment, le processeur de commande détermine, à partir des informations de signalisation, les valeurs des ICVS et les numéros de circuits de sortie à attribuer en fonction des ICVE des cellules reçues et des numéros de circuits d'entrée sur lesquelles ces cellules sont reçues. Les valeurs des ICVS sont chargées dans les mémoires TAB-ICVSj pour les différents circuits de sortie.

La lecture d'un ICVS dans la mémoire TAB-ICVSj doit être effectuée en appliquant le numéro de circuit d'entrée considéré au bout du nombre de périodes t correspondant au décalage avec lequel la cellule reçue par ce circuit d'entrée, et devant être acheminée vers le circuit CSj, peut être effectivement transférée.

A cet effet, le numéro de circuit d'entrée est appliqué à la mémoire TAB-ICVSj par l'intermédiaire d'un circuit de mémorisation DEC-ICVSj dont l'entrée est reliée au bus BUS-N° CE. Le circuit DEC-ICVSj comporte autant de positions de rangement de numéros de circuits d'entrée que la table TAB-OCC ET PRIO comporte d'espaces de rangement, c'est-à-dire 32 dans l'exemple considéré. Chaque numéro de circuit d'entrée transmis par le bus BUS-N° CE est rangé dans le circuit DEC-ICVSj à la position désignée par l'information DECALAGE reçue du bus BUS-DEC. Afin que ne soient stockés dans le circuit DEC-ICVSj que les numéros de circuits d'entrée concernant le circuit de sortie CSj, une sélection supplémentaire est nécessaire. Pour ce faire, le signal acheminé par la ligne DEC-Vj, issu de la table TAB-CX et transmis à la table TAB-OCC ET PRIO, est également appliqué au circuit DEC-ICVSJ afin de valider, sur ce circuit, l'enregistrement du numéro de circuit d'entrée traité par la table TAB-OCC ET PRIO au même instant.

A chaque période t, l'ensemble des informations contenues dans le circuit DEC-ICVSj est décalé d'une position vers la sortie de ce circuit, laquelle est appliquée à la sélection de la table TAB-ICVSj.

Ainsi, pour une cellule entrante, l'information DECALAGE est appliquée à l'ICVS sélectionné correspondant (ou aux ICVS sélectionnés correspondants en cas de diffusion) et le numéro de circuit d'entrée stocké dans le ou les circuits DEC-ICVSj sélectionnés pointe dans la ou les tables correspondantes TAB-ICVSj au bout d'un nombre de périodes t correspondant à ce décalage, c'est-à-dire au moment où le circuit d'entrée correspondant commence à émettre la cellule sur la matrice de connexion S/T.

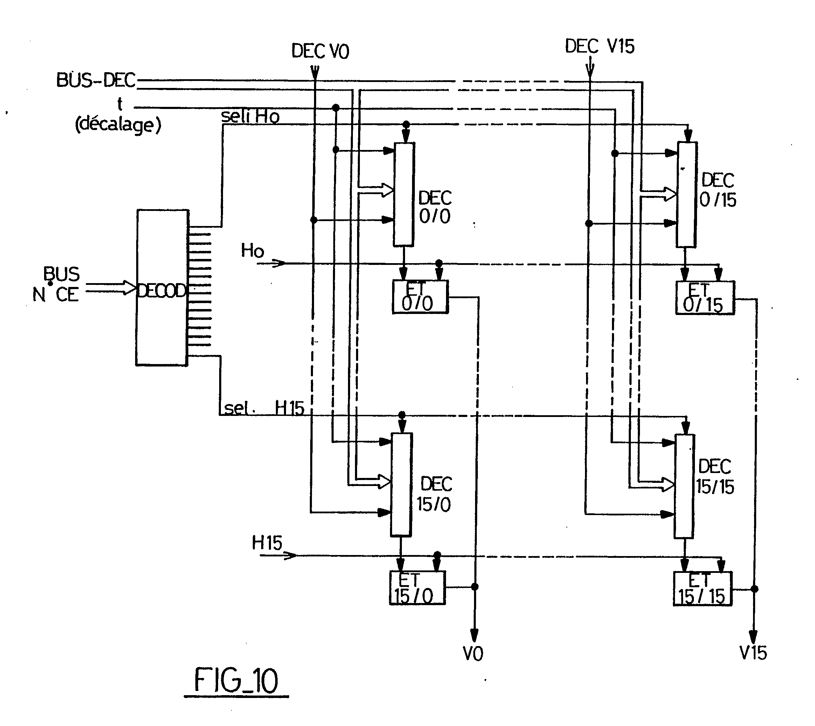

**Matrice de connexion** (figure 10)

Les liaisons horizontales H0 à H15 et verticales V0 à V15 sont unifilaires. Chaque ligne horizontale Hi est reliée en parallèle sur les premières entrées de portes ETi/j de type ET à deux entrées. Chaque porte ETi/j a sa deuxième entrée validée par le signal de sortie d'un circuit de mémorisation particulier DECi/j et a sa sortie reliée à la ligne verticale Vj. Ainsi, dans l'exemple considéré (i et j variant de 0 à 15), la matrice de connexion S/T comprend 16 x 16 = 256 circuits DECi/j et 256 portes ETi/j.

La fonction des circuits DECi/j est de valider la connexion entre les lignes horizontales Hi et les lignes verticales Vj au bon moment, en tenant compte de l'information DECALAGE fournie par la table TAB-OCC ET PRIO via le bus BUS-DEC. Pour ce faire, chaque circuit DECi/j comprend autant de positions de rangement que les registres à décalage de la table TAB-OCC ET PRIO, c'est-à-dire 32 dans l'exemple présent.

Un circuit de décodage DECOD reçoit les numéros de circuit d'entrée transmis par le bus BUS-N° CE et valide de façon correspondante des lignes unifilaires DEC-H0, ..., DEC-Hi, DEC-H15 connectées aux sorties du circuit DECOD, chaque sortie correspondant à un numéro de circuit d'entrée.

Le circuit DECi/j reçoit les informations de sélection sur les lignes DEC-Hi et DEC-Vj. Lorsque le circuit DECi/j est sélectionné, une valeur 1 est introduite dans la position binaire désignée par le bus BUS-DEC.

A chaque période t, l'ensemble des informations binaires contenues dans chaque circuit DECi/j est décalée d'une position en direction de la sortie de ce circuit. Lorsque, pendant une période t, cette sortie est au niveau 1, la porte associée ETi/j est validée et les informations émises sur la liaison horizontale Hi depuis le registre REG-Hi sont transmises, via cette porte ETi/j, vers la liaison verticale Vj à destination du circuit de sortie CSj. Les sorties des portes ET0/j à ET15/j sont reliées en commun à la liaison verticale Vj, constituant un circuit logique OU câblé.

En cas de signal prioritaire PRIO, le bus BUS-DEC contient la valeur zéro. Ceci entraîne le chargement en tête (position 0) des circuits DEC-PEi, DEC-ICVSj, et DECi/j. Dans ce cas, la période t considérée n'apporte pas de décalage dans ces circuits. Ceci est obtenu en inhibant la commande de décalage par le signal PRIO au moyen d'une porte (non représentée) à travers laquelle passe le signal d'horloge de période t destiné aux circuits DEC-PEi, DEC-ICVSj et DECi/j.

Un ou plusieurs niveaux de priorité supplémentaires peuvent être prévus, en disposant d'autant d'ensembles supplémentaires constitués chacun de circuits tels que DEC-PEi, DEC-ICVSJ, DECi/j, et TAB-OCC ET PRIO.

## TRANSFERT MIXTE SYNCHRONE-ASTHCHRONE

Les deux modes de réalisation décrits ci-dessus s'appliquent à la commutation de cellules transportant des canaux asynchrones de données et pouvant, de ce fait, se situer dans un intervalle de temps T quelconque sur une artère à haut débit.

Certains standards de normalisation, tel que DQDB ("Distributed Queue Dual Bus") proposé par IEEE 802-6 préconisent des trames mixtes transportant, sous forme de cellules, des canaux asynchrones de données mais aussi des canaux synchrones.

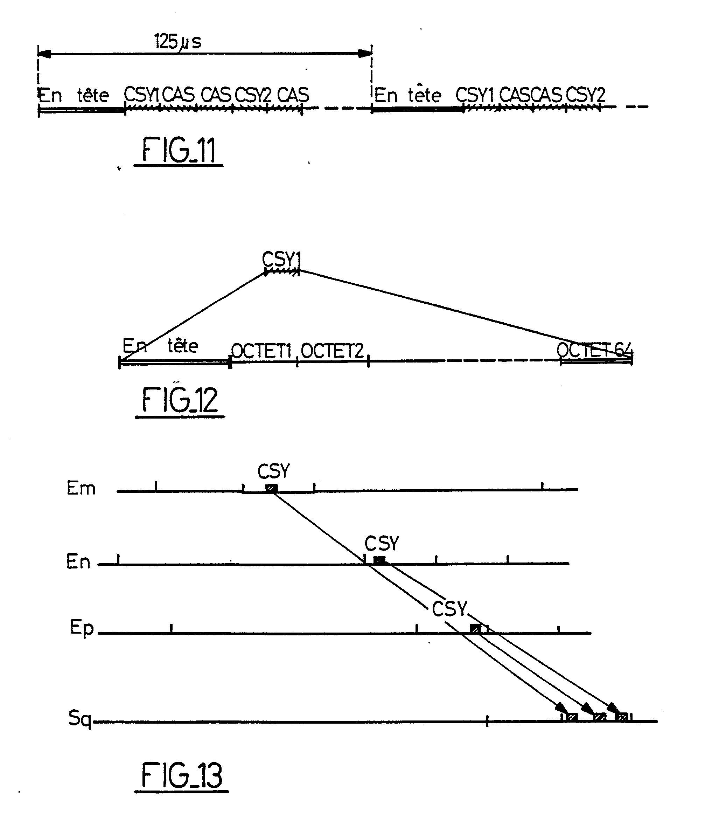

Une telle trame présente une durée fixe (généralement 125 microsecondes) et transporte un nombre déterminé de cellules derrière l'en-tête de trame (figure 11). Les cellules CSY (CSY1, CSY2, ...) transportant des canaux synchrones se présentent d'une manière récurrente à chaque trame. Les cellules CAS transportant des canaux asynchrones peuvent se situer n'importe où dans les intervalles laissés par les cellules CSY.

Une cellule CSY (figure 12) présente, derrière son en-tête, un champ d'information découpé en octets, 64 octects par exemple, chacun de ces octets étant issu du flux continu d'un canal synchrone, à 64 kbit/s dans le cas présent (figure 12). Ainsi, dans une cellule CSY, les octets successifs proviennent généralement de canaux différents.

Le système de commutation selon l'invention peut être réalisé afin de commuter les cellules CSY de sorte que :
- les cellules CSY puissent être acheminées de manière récurrente sur les artères de sortie, et
- les cellules CSY placées sur les artères sortantes contiennent des octets tels que chacun d'entre eux peut être un octet d'une cellule quelconque provenant de n'importe laquelle des artères entrantes (figure 13), le système pouvant ainsi commuter, de façon transparente, des canaux synchrones à 64 kbits/s d'une entrée quelconque vers une sortie quelconque.

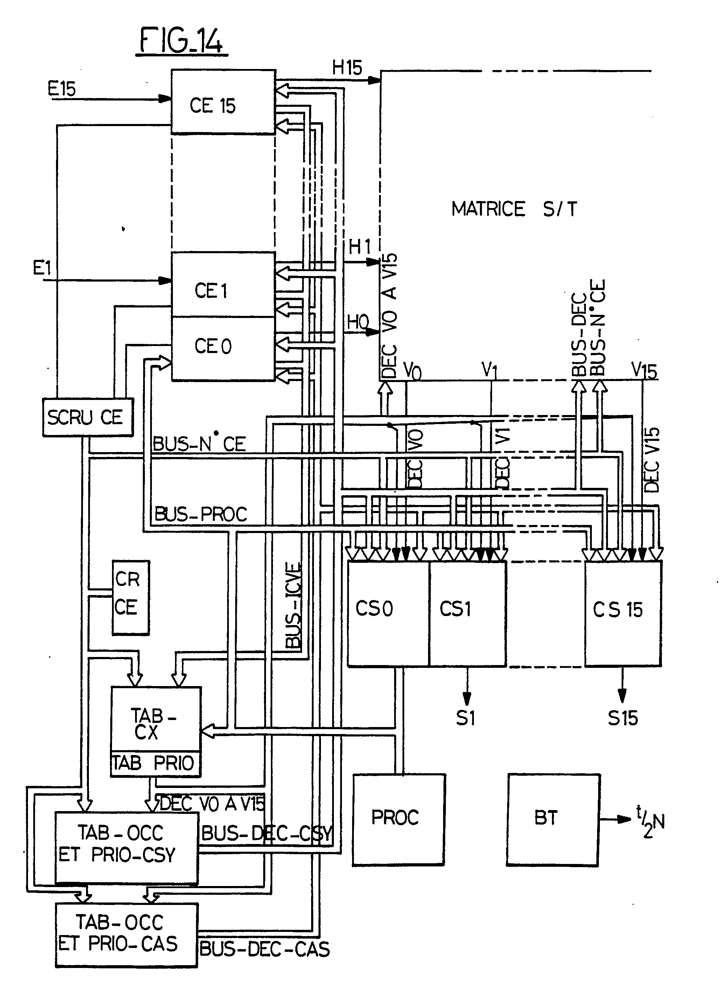

Le système de commutation a par exemple un schéma fonctionnel tel qu'illustré par la figure 14, son principe de fonctionnement étant inchangé par rapport à celui du deuxième mode de réalisation.

Les cellules CSY devant être acheminées lors du passage de chaque trame, le système doit assurer une priorité d'acheminement de celles-ci, les cellules CAS n'étant acheminées que sur un deuxième niveau de priorité.

Par rapport au schéma fonctionnel de la figure 7, il y a de ce fait, non pas une, mais deux tables d'occupation et de priorité, une table TAB-OCC ET PRIO-CSY chargée de gérer les attentes des cellules CSY et une table TAB-OCC ET PRIO-CAS chargée de gérer les attentes des cellules CAS. La première table fournit un signal DECALAGE-CSY sur un bus BUS-DEC-CSY et la deuxième fournit un signal DECALAGE-CAS sur un bus BUS-DEC-CAS, ces deux bus étant reliés aux circuits d'entrée et de sortie. Les tables TAB-OCC ET PRIO-CSY et TAB-OCC ET PRIO-CAS reçoivent le signal de chargement, de période t/16, et le signal de commande d'e décalage de période t. Pour le reste, le schéma fonctionnel est semblable à celui illustré par la figure 7.

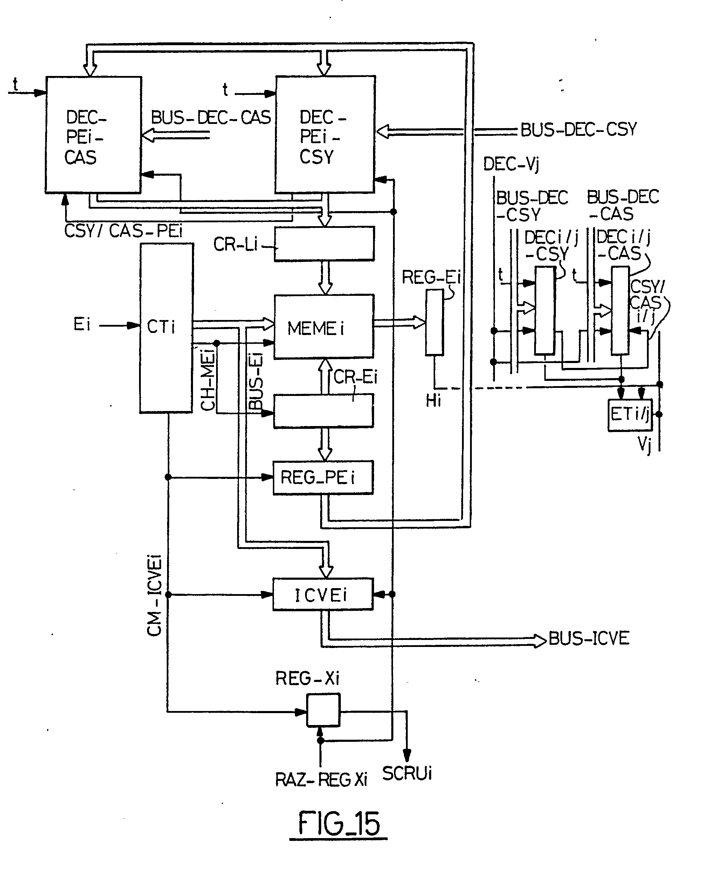

Le circuit d'entrée (figure 15) comprend un circuit de mémorisation DEC-PEi-CSY auquel accède le bus BUS-DEC-CSY et un circuit de mémorisation DEC-PEi-CAS auquel accède le bus BUS-DEC-CAS. Les circuits DEC-PEi-CSY et DEC-PEi-CAS reçoivent le signal de commande de décalage de période t et ont leurs sorties reliées au compteur de lecture CR-Li. Un signal de sélection CSY/CAS-PEi bloque la sortie du circuit DEC-PEi-CAS et inhibe le décalage de celui-ci tant que le circuit DEC-PEi-CSY n'est pas vide.

De la sorte, le circuit de mémorisation DEC-PEi-CSY est vidé en priorité dans le compteur CR-Li au rythme du signal de décalage de période t, le circuit DEC-PEi-CAS étant décalé et son contenu transféré au compteur CR-Li uniquement lorsque le circuit DEC-PEi-CSY est vide.

De même, la matrice de connexion S/T comporte, à chaque noeud, un circuit de mémorisation DECi/j-CSY auquel est connecté le bus BUS-DEC-CSY et un circuit de mémorisation DECi/j-CAS auquel est connecté le bus BUS-DEC-CAS. Les circuits DECi/j-CSY et DECi/j-CAS sont reliés à la porte ETi/j et reçoivent le signal de commande de décalage de période t. Un signal de sélection CSY/CAS-i/j bloque le circuit DECi/j-CAS et inhibe son décalage tant que le circuit DECi/j-CSY n'est pas vide, de sorte que celui-ci est vidé en priorité, le circuit DECi/j-CAS étant décalé lorsque le circuit DECi/j-CSY est vide. Pour le reste, le circuit d'entrée et la matrice sont semblables à ceux illustrés par les figures 8 et 10.

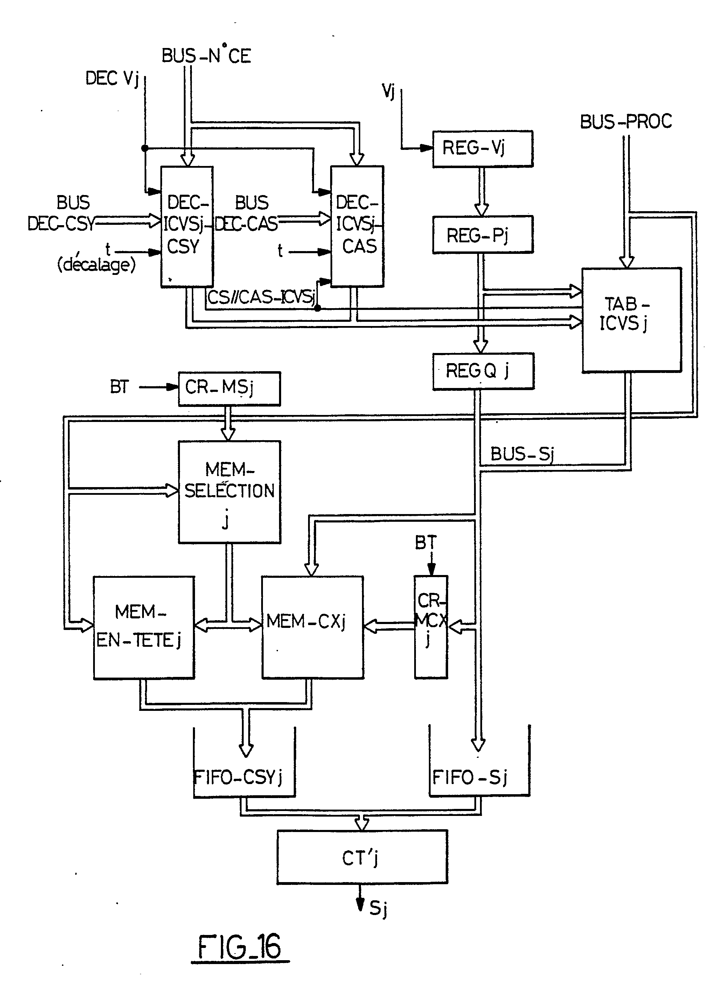

Le circuit de sortie CSj gérant les deux types de cellules CSY et CAS est illustré par la figure 16.

Les bus BUS-DEC-CSY et BUS-DEC-CAS sont reliés à des circuits de mémorisation respectifs DEC-ICVSj-CSY et DEC-ICVSj-CAS.

Les sorties de ces circuits sont reliées à la mémoire TAB-ICVSj, un signal de sélection CSY/CAS-ICVSj bloquant le circuit DEC-ICVSj-CAS et inhibant son décalage tant que le circuit DEC-ICVSj-CSY n'est pas vide.

Lorsque c'est le circuit DEC-ICVSj-CAS qui est actif, le circuit DEC-ICVSj-CSY étant vide, il adresse, comme précédemment, la mémoire TAB-ICVSj, en association avec la sortie du registre REG-Pj, à un emplacement correspondant à l'en-tête ICVS de la cellule sortante. En utilisant le bus BUS-Sj, cet en-tête est transmis au circuit FIFO-Sj, puis, à sa suite, la partie donnée de la cellule provenant du registre REG-Qj via le bus BUS-Sj.

Lorsque c'est le circuit DEC-ICVS-CSY qui est actif, la mémoire TAB-ICVSJ contient alors, non pas un ICVS, mais une adresse de rangement de la cellule CSY entrante dans une mémoire de connexion MEM-CXj. Cette adresse sert à charger un compteur CR-MCXj lequel évolue, sous le contrôle d'un signal provenant de la base de temps BT, afin de ranger dans la mémoire MEM-CXj les octets successifs du champ d'information de la cellule CSY provenant du registre REG-Qj.

Pour chaque trame de sortie, la mémoire MEM-CXj contient les champs d'information des cellules CSY qui contiennent au moins un octet à transférer vers l'artère sortante correspondante. Ces octets sont insérés chacun dans une cellule CSY déterminée de cette voie sortante, à un emplacement déterminé.

A cet effet, les en-têtes des cellules CSY sortantes, sont stockés dans une mémoire à double accès MEM-EN-TETEj chargée à partir du bus BUS-PROC. Ce dernier charge également une mémoire à double accès MEM-SELECTIONj qui contient les adresses des en-têtes des cellules sortantes contenues dans la mémoire MEM-EN-TETEj. La mémoire MEM-SELECTIONj contient également, dans l'ordre de leur rangement dans les cellules sortantes CSY, les adresses des octets de données à insérer dans ces cellules. Cet ordre peut être quelconque, mais toujours le même.

Sous le contrôle d'un compteur CR-MSj, la mémoire MEM-SELECTIONj est lue cycliquement pour chaque trame de sortie. Pour chaque cellule CSY sortante, la mémoire MEM-SELECTIONj fournit une adresse à la mémoire MEM-EN-TETEj laquelle est lue et fournit un en-tête à un circuit FIFO-CSYj. La mémoire MEM-SELECTIONj fournit également à la mémoire MEM-CXj les adresses des octets successifs à ranger dans la cellule sortante. Ces octets sont, au fur et à mesure, stockés dans le circuit FIFO-CSYj, à la suite de l'en-tête. En cas d'octets vides, la mémoire MEM-SELECTIONj pointe sur une zone vide de la mémoire MEM-CXj.

Les sorties des circuits FIFO-Sj et FIFO-CSYj sont présentées au circuit de traitement CT'j, lequel extrait les cellules CSY et CAS conformément à l'ordonnancement de ces cellules dans la trame de sortie.

Les mémoires TAB-ICVSj, MEM-CXj, MEM-EN-TETEj, MEM-SELECTIONj sont chargées par le processeur de commande PROC, via le bus BUS-PROC, en fonction notamment des informations de signalisation reçues par le système.

Il peut se produire des configurations de trafic de cellules transportant des canaux synchrones pour lesquelles une cellule sortante a ses octets de données provenant d'un nombre élevé de cellules entrantes différentes, voire même, dans un cas extrême, a chacun des octets de données provenant d'une cellule entrante différente. Il est alors nécessaire de transférer autant de cellules complètes vers le circuit de sortie, qu'il y a d'octects dans cette cellule sortante.

Dans ce cas, afin d'améliorer le trafic, il serait possible d'utiliser une artère sortante particulière spécialement pour effectuer une telle concentration d'octects sur des cellules sortantes. Ces dernières sont alors réinjectées sur une artère entrante réservée à cet effet et routées, via le système, vers la ou les artères sortantes destinataires.

## Revendications

1. Procédé de commutation de cellules entre des artères entrantes et des artères sortantes, au moyen d'une matrice de connexion ayant des liaisons horizontales et verticales correspondant aux artères entrantes et aux artères sortantes, procédé caractérisé en ce que :
- chaque cellule entrante parvenant sur une artère entrante (Ei) est détectée et, en réponse à la détection de la cellule, celle-ci est enregistrée dans une mémoire d'un circuit d'entrée (CEi) auquel l'artère entrante est connectée, et la ou chaque artère sortante (Sj) vers laquelle la cellule entrante doit être transférée est déterminée en fonction d'informations pré-enregistrées,
- les réservations d'occupations des liaisons horizontales (Hi) et verticales (Vj) de la matrice de connexion devant être sélectionnées pour permettre le transfert de cellules entrantes, chacune vers au moins une artère sortante, sont enregistrées dans une table d'occupation (TAB-OCC ET PRIO), pour chacun d'un nombre donné de périodes de transfert, chacune des liaisons horizontales et verticales ne pouvant être sélectionnée qu'une seule fois au cours de chaque période de transfert,
- pour chaque nouvelle cellule entrante, une période de transfert est sélectionnée, au cours de laquelle la liaison horizontale et la ou chaque liaison verticale, dont la sélection est nécessaire pour assurer le transfert de cette nouvelle cellule entrante, sont libres dans la table d'occupation, l'occupation de ces liaisons est marquée dans la table d'occupation pour la période de transfert sélectionnée, et le décalage temporel avec lequel le transfert de la nouvelle cellule entrante pourra être effectué est déterminé, et

- à chaque nouvelle période de transfert, la table d'occupation est décalée, les liaisons horizontales et verticales dont l'occupation a été enregistrée pour cette nouvelle période sont sélectionnées, et les cellules dont le transfert est à réaliser au cours de cette période sont lues dans les mémoires des circuits d'entrée, la lecture d'une cellule étant retardée, par rapport à l'enregistrement de celle-ci, d'une quantité correspondant au décalage temporel déterminé pour cette cellule.

2. Procédé selon la revendication 1, caractérisé en ce que, pour chaque cellule entrante ayant en en-tête un indicateur de circuit virtuel entrant (ICVE), l'identificateur de circuit virtuel sortant correspondant (ICVS) est lu dans une mémoire à une adresse fonction de l'identification de circuit virtuel entrant et de l'artère entrante de laquelle est issue la cellule entrante, la lecture étant retardée, par rapport à l'instant du stockage de la cellule entrante, d'une quantité correspondant au décalage temporel déterminé pour celle-ci, et l'identificateur de circuit virtuel sortant lu est placé en tête de la cellule à la sortie de celle-ci.

3. Procédé selon l'une quelconque des revendications 1 et 2, caractérisé en ce qu'en réponse à la détection d'une cellule prioritaire, la liaison horizontale et la ou les liaisons verticales nécessaires au transfert de la cellule vers une ou plusieurs artères sortantes sont sélectionnées au cours de la première période de transfert à venir, le décalage de la table d'occupation pour cette période étant inhibé.

4. Procédé selon l'une quelconque des revendications 1 à 3, caractérisé en ce que, pour chaque nouvelle cellule entrante, la période de transfert sélectionnée est la plus proche pour laquelle la liaison horizontale et la ou chaque liaison verticale dont la sélection est nécessaire pour assurer le transfert de cette nouvelle cellule entrante sont libres dans la table d'occupation.

5. Procédé selon l'une quelconque des revendications 1 à 4 pour la commutation de premières cellules (CSY) ayant un premier niveau de priorité et de deuxièmes cellules (CAS) ayant un deuxième niveau de priorité inférieur au premier, caractérisé en ce que :

- les liaisons de la matrice de connexion devant être sélectionnées pour permettre le transfert de premières cellules entrantes sont enregistrées dans une première table d'occupation (TAB-OCC ET PRIO-CSY), et les liaisons de la matrice de connexion devant être sélectionnées pour permettre le transfert de deuxièmes cellules entrantes sont enregistrées dans une deuxième table d'occupation (TAB-OCC ET PRIO-CAS),

- pour chaque nouvelle première cellule entrante, une période de transfert est sélectionnée dans la première table d'occupation, au cours de laquelle les liaisons de la matrice dont la sélection est nécessaire pour assurer le transfert de cette nouvelle première cellule entrante sont libres d'occupation, et une première valeur de décalage temporel est déterminée,

- pour chaque nouvelle deuxième cellule entrante, une période de transfert est sélectionnée dans la deuxième table d'occupation, au cours de laquelle les liaisons de la matrice dont la sélection est nécessaire pour assurer le transfert de cette nouvelle deuxième cellule entrante sont libres d'occupation, et une deuxième valeur de décalage temporel est déterminée, et

- pour chaque nouvelle période de transfert

. si la première table d'occupation n'est pas vide, celle-ci est décalée d'une période, le décalage de la deuxième table d'occupation étant inhibé, les liaisons de la matrice dont la sélection est marquée dans la première table d'occupation pour cette nouvelle période sont sélectionnées, et les premières cellules dont le transfert est à réaliser au cours de cette période sont lues dans les mémoires des circuits d'entrée, la lecture d'une première cellule étant retardée, par rapport à l'instant du stockage de celle-ci, d'une quantité fonction de la première valeur de décalage temporel déterminée pour cette nouvelle cellule, et

. si la première table d'occupation est vide, la deuxième table d'occupation est décalée d'une période, les liaisons de la matrice dont la sélection est marquée dans la deuxième table d'occupation pour cette nouvelle période, sont sélectionnées, et les deuxièmes cellules dont le transfert est à réaliser au cours de cette période sont lues dans les mémoires des circuits d'entrée, la lecture d'une deuxième cellule étant retardée, par rapport à l'instant du stockage de celle-ci, d'une quantité fonction de la deuxième valeur de décalage temporel déterminée pour cette cellule.

6. Procédé selon la revendication 5, pour la commutation de premières cellules (CSY) transportant des canaux synchrones et de deuxièmes cellules (CAS) transportant des canaux asynchrones, et contenues dans les mêmes trames, caractérisé en ce que les octets de chaque première cellule sont stockés, après passage à travers la matrice de connexion, dans une mémoire de connexion (MEM-CXj) d'un circuit de sortie connecté à l'artère sortante sur laquelle lesdits octets doivent être transmis, et les octets stockés dans la mémoire de connexion sont lus dans un ordre prédéterminé pour être insérés dans des cellules sortantes.

7. Système de commutation de cellules entre des artères entrantes (Ei) et des artères sortantes (Sj), comprenant une matrice de connexion (S/T) ayant des liaisons horizontales (Hi) et verticales (Vj) correspondant aux artères entrantes et sortantes, système caractérisé en ce qu'il comporte en outre :
- des circuits d'entrée (CEi) chacun connecté à une artère entrante respective et comprenant des moyens de détection d'une cellule entrante, et une mémoire (MEM-Ei) de stockage des cellules entrantes,
- des circuits de mémorisation d'adresses (MEM-PL/ICVS ; DEC-PEi) pour mémoriser des adresses de stockage des cellules entrantes dans les mémoires des circuits d'entrée ;
- une table de connexions (TAB-CX) dans laquelle sont enregistrées des informations identifiant la ou chaque artère sortante vers laquelle une cellule entrante doit être transférée ;
- une table d'occupation (TAB-OCC ET PRIO) destinée à enregistrer, pour chacune d'une pluralité de périodes de transfert, les occupations des liaisons horizontales (Hi) et verticales (Vj) devant être sélectionnées pour permettre le transfert de cellules entrantes, chacune vers au moins une artère sortante, chacune des liaisons horizontales et verticales ne pouvant être sélectionnée qu'une seule fois au cours de chaque période de transfert, la table d'occupation (TAB-OCC ET PRIO) comprenant : des moyens reliés à la table de connexion (TAB-CX) et agissant en réponse à la détection d'une cellule entrante sur un circuit d'entrée pour sélectionner une période de transfert au cours de laquelle la liaison horizontale et la ou chaque liaison verticale de la matrice de connexion (S/T), dont la sélection est nécessaire pour assurer le transfert de la cellule entrante vers la ou chaque artère sortante déterminée par la table de connexion, sont libres d'occupation ; des moyens pour marquer l'occupation de ces liaisons, dont la sélection est nécessaire, dans la table d'occupation, pour la période sélectionnée; et des moyens pour élaborer un signal de décalage représentant le décalage temporel entre la détection de la cellule entrante et la période au cours de laquelle le transfert de la cellule entrante pourra être effectué ;
- des moyens pour commander le décalage de la table d'occupation (TAB-OCC ET PRIO) à chaque nouvelle période de transfert ;
- des circuits de mémorisation de détection (MEM-SEL ; DECi/j) pour mémoriser les informations de commande de sélection des liaisons horizontales et verticales de la matrice et
- des moyens d'adressage des circuits de mémorisation d'adresses et de sélection, recevant le signal de décalage de manière que chaque cellule stockée dans une mémoire de circuit d'entrée soit lue, et la liaison horizontale et la ou chaque liaison verticale correspondante de la matrice de connexion soient sélectionnées, avec un retard, par rapport au stockage de la cellule, correspondant audit décalage temporel.

8. Système de commutation selon la revendication 7, caractérisé en ce qu'il comporte en outre : des circuits de mémorisation d'ICVS (MEM-PL/ICVS ; TAB-ICVSj) pour mémoriser des identificateurs de circuit virtuel sortant (ICVS) devant être placés en tête des cellules sortant du système ; et des moyens d'adressage des circuits de mémorisation d'ICVS recevant le signal de décalage de manière que chaque identificateur virtuel sortant soit lu avec un retard, par rapport au stockage de la cellule correspondante dans une mémoire d'un circuit d'entrée, correspondant audit décalage temporel.

9. Système de commutation selon les revendications 7 et 8, caractérisé en ce que les circuits de mémorisation d'adresses, de sélection et d'ICVS comprennent des mémoires (MEM-PL/ICVS, MEM-SEL) dans lesquelles sont enregistrées, pour chacune dudit nombre prédéterminé de périodes de transfert, les adresses de stockage des cellules devant être transférées lors de cette période, les informations de commande de sélection des liaisons de la matrice de connexion devant être sélectionnées lors de cette période et les identificateurs de circuit virtuel sortant devant être placé en tête des cellules sortantes transférées lors de cette période, et les moyens d'adressage sont agencés pour commander alternativement la lecture et l'écriture dans des positions de ces mémoires ayant des adresses décalées l'une de l'autre d'une quantité correspondant audit décalage temporel.

10. Système de commutation selon la revendication 7, caractérisé en en ce que les circuits de mémorisation d'adresses comprennent une pluralité de circuits de mémorisation d'adresses (DEC-PEi), chacun associé à une mémoire de stockage (MEM-Ei) d'un circuit d'entrée (CEi), chaque circuit de mémorisation d'adresse ayant une entrée connectée à un registre d'adresse (REG-PEi) contenant l'adresse de stockage de chaque nouvelle cellule entrante détectée par ce circuit d'entrée et une sortie fournissant une adresse de lecture dans la mémoire de stockage associée (MEM-EI) et des moyens sont prévus pour décaler le circuit de mémorisation d'adresse d'une position vers sa sortie à chaque nouvelle période de transfert, et pour commander le chargement du contenu dudit registre d'adresse (REG-PEi) dans une position du circuit de mémorisation (DEC-PEi) décalée de la sortie de celui-ci d'une quantité correspondant audit décalage temporel, suite à la détection d'une cellule entrante.

11. Système de commutation selon la revendication 7, caractérisé en ce que les circuits de mémorisation de sélection comprennent une pluralité de circuits de mémorisation d'information de connexion (DECi/j), chacun associé à un noeud entre une liaison horizontale (Hi) et une liaison verticale (Vj) de la matrice de connexion, chaque circuit de mémorisation d'information de connexion ayant une première entrée connectée à une ligne de sélection horizontale une deuxième entrée connectée à une ligne de sélection verticale, et une sortie commandant la connexion entre la liaison horizontale et la liaison verticale associées, et des moyens sont prévus pour commander le décalage du contenu du circuit de mémorisation d'information de connexion d'une position à chaque nouvelle période de transfert, et pour enregistrer une information de commande de connexion dans le circuit de mémorisation d 'information de connexion à une position décalée par rapport à la sortie de celui-ci d'une quantité correspondant audit décalage temporel, en réponse à l'activation simultanée de la ligne de sélection horizontale et de la ligne de sélection verticale correspondantes, signifiant qu'une cellule entrante a été reçue par le circuit d'entrée correspondant à la liaison horizontale concernée et doit être transférée vers une artère sortante correspondant à la liaison verticale concernée.

12. Système de commutation selon la revendication 8, caractérisé en ce que les troisièmes circuits de mémorisation d'ICVS comprennent une pluralité de circuits (TAB-ICVSQj) chacun associé à une liaison verticale de la matrice de connexion, chaque circuit de mémorisation d'ICVS contenant les valeurs d'ICVS à associer à une cellule en fonction du circuit d'entrée sur lequel elle a été reçue et de l'identificateur de circuit virtuel entrant figurant en tête de la cellule entrante, une pluralité de circuits de mémorisation d'adresse de circuit d'entrée (DEC-ICVSj) chacun associé à un circuit de mémorisation d'ICVS, chaque circuit de mémorisation d'adresse de circuit d'entrée recevant une information indiquant à chaque instant le circuit d'entrée sur lequel l'arrivée d'une cellule entrante est détectée et ayant sa sortie reliée à une entrée d'adressage du circuit de mémorisation d'ICVS correspondant, des moyens étant prévus pour décaler d'une position le circuit de mémorisation d'adresse de circuit d'entrée à chaque période de transfert, et pour charger dans celui-ci l'adresse de circuit d'entrée qu'il reçoit dans une position décalée par rapport à sa sortie d'une quantité correspondant audit décalage temporel, lorsque la liaison verticale correspondante de la matrice de connexion est sélectionnée.

13. Système de commutation selon l'une quelconque des revendications 7 à 12, caractérisé en ce qu'il comprend des moyens pour inhiber le décalage de la table d'occupation (TAB-OCC ET PRIO) en réponse à la détection d'une cellule entrante prioritaire, et des moyens pour effectuer la lecture de la cellule prioritaire stockée dans la mémoire du circuit d'entrée où elle a été reçue et pour sélectionner les liaisons correspondantes de la matrice de connexion, avec un décalage temporel nul.

14. Système de commutation selon l'une quelconque des revendications 7 à 13, pour la commutation de premières cellules ayant un premier niveau de priorité, et de deuxièmes cellules ayant un deuxième niveau de priorité inférieur au premier, caractérisé en ce qu'il comporte :
- une première table d'occupation (TAB-OCC ET PRIO-CSY) destinée à enregistrer, pour chacune d'une pluralité de périodes de transfert, les occupations des liaisons horizontales (Hi) et verticales (Vj) devant être sélectionnées pour permettre le transfert de premières cellules entrantes, la première table d'occupation comprenant des moyens pour élaborer un premier décalage temporel en réponse à la détection d'une première cellule entrante,
- une deuxième table d'occupation (TAB-OCC ET PRIO-CAS) destinée à enregistrer, pour chacune d'une pluralité de périodes de transfert, les occupations des liaisons horizontales (Hi) et verticales (Vj) devant être sélectionnées pour permettre le transfert de deuxièmes cellules entrantes, la deuxième table d'occupation comprenant des moyens pour élaborer un deuxième décalage temporel en réponse à la détection d'une deuxième cellule entrante ;
- des premiers circuits de mémorisation d'adresses (DEC-PEi-CSY) pour mémoriser des adresses de stockage des premières cellules entrantes dans les mémoires des circuits d'entrée et des deuxièmes circuits de mémorisation d'adresses (DEC-PEi-CAS) pour mémoriser des adresses de stockage des deuxièmes cellules entrantes dans les mémoires des circuits d'entrée,
- des premiers circuits de mémorisation de sélections (DECi/j-CSY) pour mémoriser des informations de commande de sélection de liaisons de la matrice de connexion pour le transfert de premières cellules, et des deuxièmes circuits de mémorisation de sélections (DECi/j-CAS) pour mémoriser des informations de commande de sélection de liaisons de la matrice de connexion pour le transfert de deuxièmes cellules ;
- des moyens d'adressage des premiers circuits de mémorisation reliés à la première table d'occupation (TAB-OCC ET PRIO-CSY) pour que chaque première cellule stockée dans un circuit d'entrée soit lue, et les liaisons correspondantes de la matrice soient sélectionnées, avec un retard, par rapport au stockage de la première cellule, fonction du premier décalage temporel,
- des moyens d'adressage des deuxièmes circuits de mémorisation reliés à la deuxième table d'occupation (TAB-OCC ET PRIO-CAS) pour que chaque deuxième cellule stockée dans un circuit d'entrée soit lue, et les liaisons correspondantes de la matrice soient sélectionnées, avec un retard, par rapport au stockage de la deuxième cellule, fonction du deuxième décalage temporel, et

- des moyens (CSY/CAS-PEi, CSY/CAS-DECi/J) pour inhiber la lecture d'un deuxième circuit de mémorisation tant que le premier circuit de mémorisation correspondant n'est pas vide.

15. Système de commutation selon la revendication 14, pour la commutation de premières cellules (CSY) transportant des canaux synchrones et de deuxièmes cellules (CAS) transportant des canaux asynchrones, caractérisé en ce qu'il comprend des circuits de sortie (CSj) chacun relié à une liaison verticale de la matrice de connexion et comprenant :

- une mémoire de sortie (MEM-CXj) pour le rangement des éléments d'information des premières cellules sortantes,

- un circuit (TAB-ICVSj) de mémorisation d'adresses de rangement des éléments d'information des premières cellules dans ladite mémoire de sortie (MEM-CXj),

- un circuit (TAB-ICVSj) de mémorisation d'identificateurs de circuit virtuel ICVS à placer en tête des deuxièmes cellules sortantes,

- un premier circuit de stockage d'adresses (DEC-ICVSj-CSY) pour stocker, en réponse à la détection d'une première cellule, une information identifiant le circuit d'entrée ayant reçu cette première cellule et constituant une information d'adressage en lecture du circuit de mémorisation d'adresses de rangement d'éléments d'information de premières cellules,

- des moyens d'adressage du premier circuit de stockage d'adresses (DEC-ICVj-CSY) reliés à la première table d'occupation (TAB-OCC ET PRIO-CSY) pour que chaque information stockée dans le premier circuit de stockage d'adresses soit lue avec un retard fonction du premier décalage temporel par rapport à la détection de la première cellule entrante correspondante,

- un deuxième circuit de stockage d'adresses (-(DEC-ICVSj-CAS) pour stocker, en réponse à la détection d'une deuxième cellule, une information identifiant le circuit d'entrée ayant reçu cette deuxième cellule et constituant une informaion d'adressage en lecture du circuit de mémorisation d'ICVS,

- des moyens d'adressage du deuxième circuit de stockage d'adresses (DEC-ICVSj-CAS) reliés à la deuxième table d'occupation (TAB-OCC ET PRIO-CAS), pour que chaque information stockée dans le deuxième circuit de stockage d'adresses soit lue avec un retard fonction du deuxième décalage temporel par rapport à la détection de la deuxième cellule correspondante,

- des moyens (CSY/CAS-ICVSj) pour inhiber la lecture d'une information dans le deuxième circuit de stockage d'adresses (DEC-ICVSj-CAS) tant que le premier circuit de stockage d'adresses (DEC-ICVSj-CSY) n'est pas vide,

- des moyens d'adressage (MEM-SELECTIONj) pour lire les éléments d'information stockés dans la mémoire de sortie (MEM-CXj) dans un ordre prédéterminé, et

- un circuit de stockage (FIFO-CSYj) recevant les éléments d'information lus dans la mémoire de sortie (MEM-CXj) pour constituer des premières cellules sortantes.

FIG_1

FIG_2

FIG_3

EP 0 403 361 A1

FIG_4

FIG_5

Val dec

sortie Hit (k+1)

ET3-Hitk

OU-Hitk

E          S

h          DHitk

vers entrée
Hit ( k – 1)

Val cht

ET2-Hitk

ET1-Hitk

DEC Hi

t$_k$

## FIG.6

FIG.7

FIG_8

FIG_9

FIG_10

DEC V0

DEC V15

BUS-DEC

t
(décalage)

seli Ho

sel. H15

BUS
N° CE

DECOD

Ho

H15

DEC
0/0

DEC
0/15

DEC
15/0

DEC
15/15

ET
0/0

ET
0/15

ET
15/0

ET
15/15

V0

V15

EP 0 403 361 A1

FIG.11

FIG.12

FIG.13

FIG.14

FIG_15

FIG_16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 310 051 (LE MATERIEL TELEPHONIQUE) <br> * Page 1, lignes 1-7; page 2, lignes 7-30; page 4, ligne 39 - page 5, ligne 5; page 5, lignes 33-38; figure 1 * <br> --- | 1,4,5,7 | H 04 L 12/56 |
| A | EP-A-0 315 918 (SIEMENS) <br> * Colonne 1, ligne 43 - colonne 2, lignes 32-38; colonne 4, lignes 7-16; colonne 4, lignes 35-49; colonne 5, lignes 4-14; figure 1 * <br> --- | 1,5,10 | |
| A | US-A-4 491 947 (FRANK) <br> * Colonne 5, ligne 60 - colonne 6, ligne 25; colonne 9, ligne 59 - colonne 10, ligne 3; colonne 10, lignes 31-43; figures 1-5 * <br> --- | 1,3-7, 13-15 | |
| A | EP-A-0 279 443 (FUJITSU) <br> * Colonne 2, lignes 22-25; colonne 4, lignes 4-16; colonne 6, ligne 41 - colonne 7, ligne 30 * <br> ----- | 1,2,8,9 ,12,15 | **DOMAINES TECHNIQUES RECHERCHES (Int. Cl.5)** <br><br> H 04 L |

Le présent rapport a été établi pour toutes les revendications

| Lieu de la recherche | Date d'achèvement de la recherche | Examinateur |
|---|---|---|
| LA HAYE | 29-08-1990 | DE LA FUENTE DEL AGUA P. |

EPO FORM 1503 03.82 (P0402)